(19) **Europäisches Patentamt**
**European Patent Office**
**Office européen des brevets**

(11) **EP 2 903 282 A1**

(12) **EUROPEAN PATENT APPLICATION**
published in accordance with Art. 153(4) EPC

(43) Date of publication:
**05.08.2015 Bulletin 2015/32**

(51) Int Cl.:
**H04N 19/50** (2014.01)

(21) Application number: **13841490.9**

(86) International application number:
**PCT/KR2013/008751**

(22) Date of filing: **30.09.2013**

(87) International publication number:
**WO 2014/051408 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 US 201261707089 P**

(71) Applicant: **Samsung Electronics Co., Ltd.**
**Suwon-si, Gyeonggi-do 443-742 (KR)**

(72) Inventors:
• **ALSHINA, Elena**
**Suwon-si**
**Gyeonggi-do 443-744 (KR)**

• **ALSHIN, Alexander**
**Suwon-si**
**Gyeonggi-do 443-744 (KR)**
• **KIM, Chan-yul**
**Bucheon-si**
**Gyeonggi-do 306-010 (KR)**
• **LEE, Tammy**
**Seoul 137-923 (KR)**

(74) Representative: **Appleyard Lees**
**15 Clare Road**
**Halifax HX1 2HY (GB)**

(54) **METHOD FOR SAO COMPENSATION FOR ENCODING INTER-LAYER PREDICTION ERROR AND APPARATUS THEREFOR**

(57) Scalable video encoding method and apparatus and scalable video decoding method and apparatus for compensating for inter-layer prediction errors between different layer images by using sample adaptive offsets (SAOs). The scalable video decoding method includes: obtaining inter-layer sample adaptive offset (SAO) use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream; determining the SAO type of the enhancement layer prediction image and offsets corresponding to the prediction errors classified according to categories, from the obtained SAO parameters; and generating an enhancement layer reconstructed image by using the enhancement layer prediction image compensated by the determined offsets by determining a category of a current sample for each pixel location of the enhancement layer prediction image.

FIG. 2A

EP 2 903 282 A1

**Description**

Technical Field

One or more embodiments of the present disclosure relate to scalable video encoding and decoding methods, and more particularly, to methods of encoding and decoding interlayer prediction errors by using sample adaptive offsets (SAOs).

Background Art

As hardware for reproducing and storing high resolution or high quality video content is being developed and supplied, a need for a video codec for effectively encoding or decoding the high resolution or high quality video content is increasing. According to a video codec of the related art, a video is encoded according to a limited encoding method based on a macroblock having a predetermined size.

Image data of the space domain is transformed into coefficients of the frequency domain via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of the space domain, coefficients of the frequency domain are easily compressed. In particular, since an image pixel value of the space domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multilayer video codec encodes and decodes base layer video and one or more enhancement layer videos. The multilayer video codec removes temporal and spatial redundancies of the base layer video and the enhancement layer videos and redundancy between layers, and thus an amount of data of the base layer video and the enhancement layer videos may be reduced.

Disclosure of the Invention

Technical Problem

One or more embodiments of the present disclosure relate to scalable video encoding methods and apparatuses for encoding an image sequence for at least one layer and encoding inter-layer prediction errors between other layer images by using sample adaptive offsets (SAOs).

One or more embodiments of the present disclosure relate to scalable video decoding methods and apparatuses by using inter-layer prediction errors received as SAO parameters.

Technical Solution

According to one or more embodiments of the present disclosure, a scalable video decoding method including: obtaining inter-layer sample adaptive offset (SAO) use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream; determining the SAO type of the enhancement layer prediction image and offsets corresponding to the prediction errors classified according to categories, from the obtained SAO parameters; and generating an enhancement layer reconstructed image by using the enhancement layer prediction image compensated by the determined offsets by determining a category of a current sample for each pixel location of the enhancement layer prediction image.

Advantageous Effects

According to one or more embodiments of scalable video encoding apparatuses and methods, inter-layer prediction errors for predicting enhancement layer images may be encoded by using sample adaptive offset (SAO) parameters. Thus, without having to encode an inter-layer prediction error for each pixel location, the inter-layer prediction errors may be encoded only by using SAO types determined based on a sample value distribution of prediction errors and offset information for each category.

According to one or more embodiments of scalable video decoding apparatuses and methods, SAO types and offsets may be obtained from a received bitstream, and SAO categories may be determined according to a distribution of sample values for each pixel of enhancement layer prediction images, thereby obtaining an offset for each SAO category by using the SAO types and offsets. Thus, although an inter-layer prediction error for each pixel is not received, an offset for each corresponding category is compensated for each pixel of the enhancement layer prediction images, and thus enhancement layer reconstructed images may be determined.

Brief Description of the Drawings

FIGS. 1A and 1B are a block diagram of a scalable video encoding apparatus and a flowchart of a scalable video encoding method, respectively, according to one or more embodiments;
FIGS. 2A and 2B are a block diagram of a scalable video decoding apparatus and a flowchart of a scalable video decoding method, respectively, according to one or more embodiments;
FIG. 3 is a block diagram of an inter-layer prediction structure, according to one or more embodiments;
FIG. 4A through 4C are conceptual diagrams of inter-layer sample adaptive offsets (SAOs), according to one or more embodiments;
FIG. 5A is a table showing edge classes of edge types, according to one or more embodiments;
FIGS. 5B and 5C are a table and a graph showing categories of edge types, according to one or more embodiments;
FIG. 6 is a diagram of SAO categories with respect to resolution ratios between layers, according to one or more embodiments;
FIG. 7A is a diagram of data units referred to so as to merge SAO parameters with a current largest coding unit (LCU), according to one or more embodiments;
FIG. 7B is a table showing codewords of SAO merge information, according to one or more embodiments;
FIG. 7C shows SAO syntax of a coding unit, according to one or more embodiments;
FIG. 8 is a block diagram of a video encoding apparatus based on coding units having a tree structure, according to one or more embodiments;
FIG. 9 is a block diagram of a video decoding apparatus based on coding units having a tree structure, according to one or more embodiments;
FIG. 10 is a diagram for describing a concept of coding units according to one or more embodiments;
FIG. 11 is a block diagram of an image encoder based on coding units, according to one or more embodiments;
FIG. 12 is a block diagram of an image decoder based on coding units, according to one or more embodiments;
FIG. 13 is a diagram illustrating deeper coding units according to depths, and partitions, according to one or more embodiments;
FIG. 14 is a diagram for describing a relationship between a coding unit and transformation units, according to one or more embodiments;
FIG. 15 is a diagram for describing encoding information of coding units corresponding to a coded depth, according to one or more embodiments;
FIG. 16 is a diagram of deeper coding units according to depths, according to one or more embodiments;
FIGS. 17 through 19 are diagrams for describing a relationship between coding units, prediction units, and transformation units, according to one or more embodiments;
FIG. 20 is a diagram for describing a relationship between a coding unit, a prediction unit, and a transformation unit, according to encoding mode information of Table 1;
FIG. 21 is a diagram of a physical structure of a disc in which a program is stored, according to one or more embodiments;
FIG. 22 is a diagram of a disc drive for recording and reading a program by using a disc;
FIG. 23 is a diagram of an overall structure of a content supply system for providing a content distribution service;
FIGS. 24 and 25 are diagrams respectively of an external structure and an internal structure of a mobile phone to which a video encoding method and a video decoding method are applied, according to one or more embodiments;
FIG. 26 is a diagram of a digital broadcast system to which a communication system is applied, according to one or more embodiments; and
FIG. 27 is a diagram illustrating a network structure of a cloud computing system using a video encoding apparatus and a video decoding apparatus, according to one or more embodiments.

Best mode for carrying out the Invention

According to one or more embodiments of the present disclosure, a scalable video decoding method including: obtaining inter-layer sample adaptive offset (SAO) use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream; determining the SAO type of the enhancement layer prediction image and offsets corresponding to the prediction errors classified according to categories, from the obtained SAO parameters; and generating an enhancement layer reconstructed image by using the enhancement layer prediction image compensated by the determined offsets by determining a category of a current sample for each pixel location of the enhancement layer prediction image.

The generating of the enhancement layer reconstructed image may include: determining the enhancement layer prediction image by using the base layer reconstructed image decoded from a base layer stream; and compensating for the enhancement layer prediction image by applying the offsets to the enhancement layer prediction image.

The determining of the enhancement layer prediction image may include: determining the enhancement layer prediction image by interpolating the base layer reconstructed image to resize the base layer reconstructed image to have the same resolution as that of an enhancement layer original image.

The obtaining of the SAO parameters may include: obtaining the SAO parameters for each data unit of one of a picture, a slice, a largest coding unit (LCU), and a coding unit of the enhancement layer prediction image, wherein the determining of the offsets includes: sequentially determining the SAO type indicating whether each sample of the data unit of the enhancement layer prediction image constitutes an edge, offsets indicating average values of the prediction errors classified according to categories with respect to the SAO type, and signs of the offsets, based on the SAO parameters, and wherein the signs of the offsets according to an inter-layer SAO are determined based on at least one of the SAO type, the categories, and a resolution ratio between a base layer image and an enhancement layer image.

The determining of the offsets may include: when inter-layer prediction errors are compensated for based on the obtained inter-layer SAO use information, using the offsets obtained from the SAO parameters, for an enhancement layer region predicted by using a base layer region according to one of an intra base layer prediction mode and a differential prediction mode in the base layer reconstructed image.

The determining of the offsets may include: obtaining the offsets according to the categories determined based on an edge direction or a sample value range of the enhancement layer prediction image, from the SAO parameters; and further obtaining the offsets according to the categories determined based on at least one of a resolution ratio between a base layer image and an enhancement layer image, a phase shift of an interpolation filter for resizing the base layer reconstructed image to have the same resolution as that of an enhancement layer original image, and a filtering order of the interpolation filter.

The obtaining of the SAO parameters may include: obtaining base layer SAO merge information indicating whether to determine offsets for the enhancement layer prediction image by using SAO parameters of a collocated region of a base layer image, and wherein the determining of the offsets includes: determining information regarding at least one of the SAO parameters for a current region of the enhancement layer prediction image by using information regarding at least one of the SAO parameters of the collocated region of the base layer image corresponding to the current region of the enhancement layer prediction image, based on the base layer SAO merge information.

According to one or more embodiments of the present disclosure, there is provided a scalable video encoding method including: determining prediction errors between samples of an enhancement layer prediction image and an enhancement layer original image for each pixel location of an enhancement layer image; determining a SAO type of the enhancement layer prediction image and offsets corresponding to the prediction errors classified according to categories, based on a distribution of sample values of the enhancement layer prediction image; and determining inter-layer SAO use information indicating whether to compensate for prediction errors according to inter-layer prediction between a base layer reconstructed image and the enhancement layer prediction image, and SAO parameters indicating the SAO type of the enhancement layer prediction image and the offsets.

The determining of the prediction errors between the samples may include: determining the enhancement layer prediction image by using the base layer reconstructed image; and determining the prediction errors between the samples of the enhancement layer prediction image and the enhancement layer original image for each pixel location, the method further including: generating the enhancement layer reconstructed image by using the enhancement layer prediction image compensated by applying the prediction errors to the enhancement layer prediction image.

The determining of the prediction errors between the samples may include: determining the enhancement layer prediction image by interpolating the base layer reconstructed image to resize the base layer reconstructed image to have the same resolution as that of the enhancement layer original image; and determining the prediction errors between the samples of the enhancement layer prediction image and the enhancement layer original image for each pixel location.

The determining of the offsets may include: determining information regarding at least one of the SAO parameters for a current region of the enhancement layer prediction image by using information regarding at least one of SAO parameters of a collocated region of a base layer image corresponding to the current region of the enhancement layer prediction image, and wherein the determining of the SAO parameters includes: outputting SAO parameters including base layer SAO merge information indicating whether to determine offsets for the enhancement layer prediction image by using the SAO parameters of the collocated region of the base layer image.

According to one or more embodiments of the present disclosure, there is provided a scalable video decoding apparatus including: an inter-layer SAO parameter obtainer for obtaining inter-layer SAO use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream; an inter-layer offset determiner for determining the SAO type of the enhancement layer prediction image and offsets corresponding to the prediction errors classified according to categories, from the obtained SAO parameters; and an enhancement layer decoder for generating an enhancement layer reconstructed image by using the enhancement layer prediction image that is compensated by using the determined offsets by determining a category of a current sample for each pixel location of the enhancement layer prediction image.

According to one or more embodiments of the present disclosure, there is provided a scalable video encoding apparatus including: an enhancement layer image encoder for generating an enhancement layer prediction image to encode an enhancement layer image; an inter-layer offset determiner for determining prediction errors between samples of the enhancement layer prediction image and an enhancement layer original image for each pixel location of the enhancement layer image, determining a SAO type of the enhancement layer prediction image and offsets corresponding to the prediction errors classified according to categories, based on a distribution of sample values of the enhancement layer prediction image; and an inter-layer SAO parameter determiner for determining inter-layer SAO use information indicating whether to compensate for prediction errors according to inter-layer prediction between a base layer reconstructed image and the enhancement layer prediction image, and SAO parameters indicating the SAO type of the enhancement layer prediction image and the offsets.

According to one or more embodiments of the present disclosure, there is provided a computer-readable recording medium having recorded thereon a computer program for executing the scalable video decoding method.

According to one or more embodiments of the present disclosure, there is provided a computer-readable recording medium having recorded thereon a computer program for executing the scalable video encoding method.

Mode for Invention

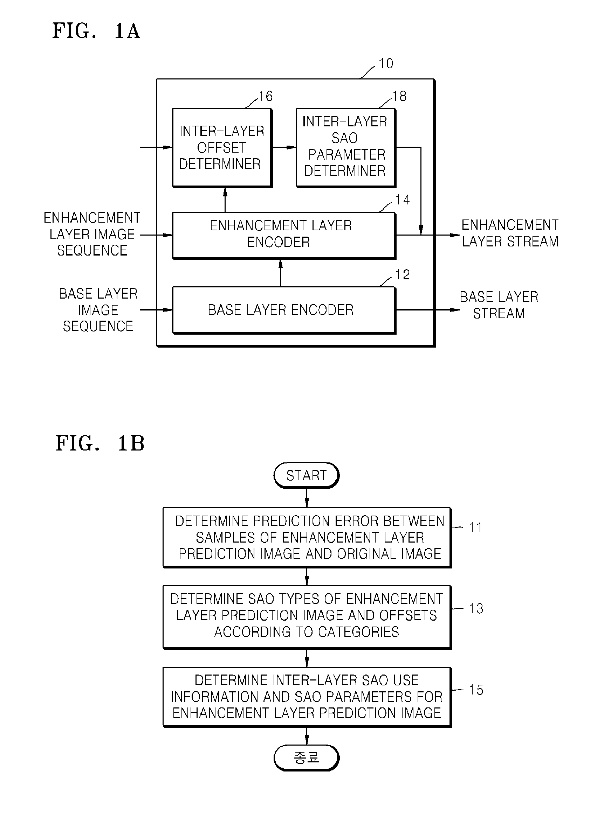

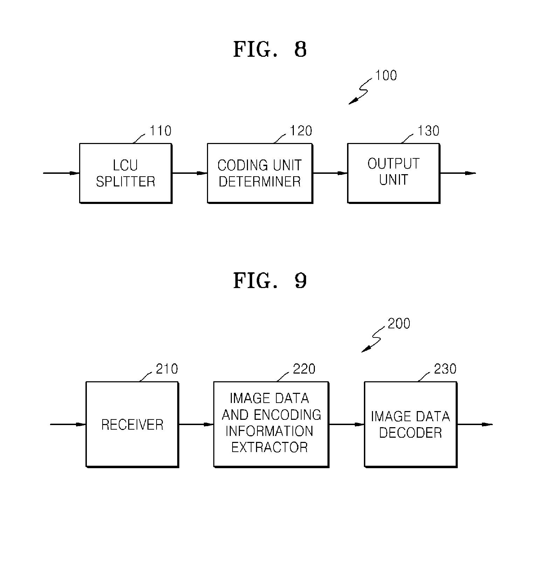

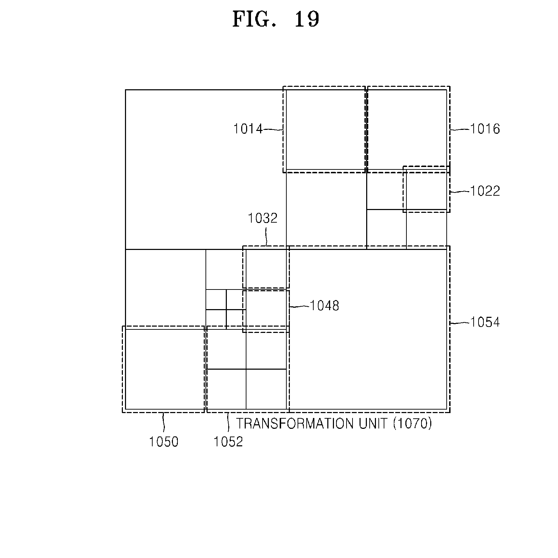

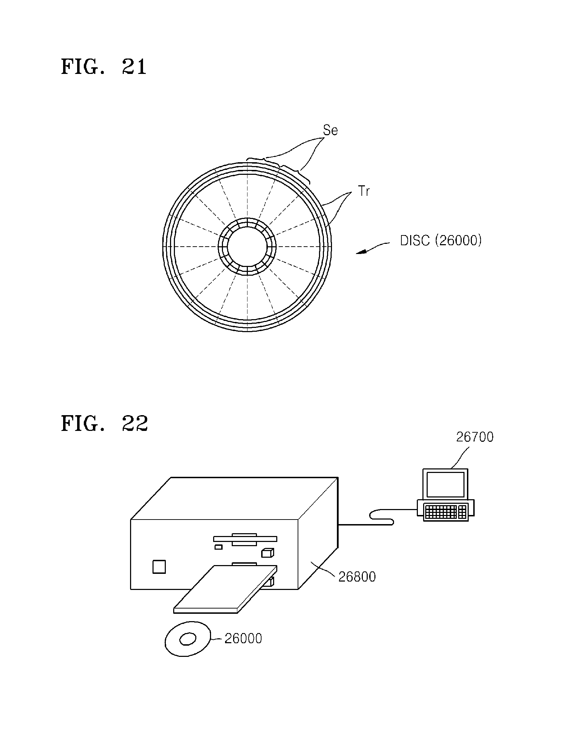

Scalable video encoding and decoding apparatuses and scalable video encoding and decoding methods according to one or more embodiments will be described with reference to FIGS. 1A through 7C below. Video encoding and decoding apparatuses and video encoding and decoding methods based on coding units having a tree structure according to one or more embodiments will also be described with reference to FIGS. 8 through 20 below. One or more embodiments to which the scalable video encoding and decoding methods and the video encoding and decoding methods described with reference to FIGS. 1A through 20 are applicable will also be described with reference to FIGS. 21 through 27 below.

An 'image' may denote a still image or a moving image of a video, or a video itself below.

A 'sample' means data assigned to a sampling location of an image as a processing target. For example, pixels in an image of a spatial region may be samples.

Scalable video encoding and decoding apparatuses and scalable video encoding and decoding methods according to an embodiment will now be described with reference to FIGS. 1A through 7C.

As used herein, the term "and/or" includes any and all combinations of one or more of the associated listed items. Expressions such as "at least one of," when preceding a list of elements, modify the entire list of elements and do not modify the individual elements of the list.

FIG. 1A is a block diagram of a scalable video encoding apparatus 10 according to one or more embodiments. FIG. 1B is a flowchart of a scalable video encoding method according to one or more embodiments.

The scalable video encoding apparatus 10 according to one or more embodiments includes a base layer encoder 12, an enhancement layer encoder 14, an inter-layer offset determiner 16, and an inter-layer sample adaptive offset (SAO) parameter determiner 18.

The scalable video encoding apparatus 10 according to one or more embodiments may classify a plurality of image sequences for each layer, encode each of the classified image sequences according to scalable video coding, and output separate streams including data encoded for each layer. The scalable video encoding apparatus 10 may encode a base layer image sequence and an enhancement layer image sequence as different layers.

The base layer encoder 12 may encode base layer images and output a base layer stream including data of the encoded base layer images.

The enhancement layer encoder 14 may encode enhancement layer images and output an enhancement layer stream including data of the encoded enhancement layer images.

For example, according to spatial scalability based scalable video coding, low resolution images may be encoded as the base layer images, and high resolution images may be encoded as the enhancement layer images. A result of encoding the base layer images may be output as the base layer stream, and a result of encoding the enhancement layer images may be output as the enhancement layer stream.

As another example, multi-view video may be encoded according to the scalable video coding. Left view images may be encoded as the base layer images, and right view images may be encoded as the enhancement layer images. Alternatively, center view images, the left view images, and the right view images may be encoded in different layers, respectively. The center view images may be encoded as the base layer images, the left view images may be encoded as first enhancement layer images, and the right view images may be encoded as second enhancement layer images.

As another example, the scalable video coding may be performed according to temporal scalability based temporal hierarchical prediction. A base layer stream including encoding information generated by encoding images of a base frame rate may be output. An enhancement layer stream including encoding information of a high frame rate may be output by further encoding images of the high frame rate by referring to the images of the base frame rate.

The scalable video coding may be performed on a base layer and a plurality of enhancement layers. When there are three or more enhancement layers, base layer images, first enhancement layer images, second enhancement layer images, ..., and Kth enhancement layer images may be encoded. Thus, a result of encoding the base layer images may be output as a base layer stream, and results of encoding the first through Kth enhancement layer images may be output as first through Kth enhancement layer streams.

The scalable video encoding apparatus 10 according to one or more embodiments may perform inter prediction that predicts a current image by referring to images of a single layer. A motion vector indicating motion information between the current image and a reference image and a residue component therebetween may be generated through inter prediction.

The scalable video encoding apparatus 10 according to one or more embodiments may also perform inter-layer prediction that predicts enhancement layer images by referring to base layer images. The scalable video encoding apparatus 10 may perform inter-layer prediction that predicts second enhancement layer images by referring to first enhancement layer images. A location difference component between a current image and a reference image of another layer and a residue component therebetween may be generated through inter-layer prediction.

When the scalable video encoding apparatus 10 according to one or more embodiments permits two or more enhancement layers, the scalable video encoding apparatus 10 may perform inter-layer prediction between a single base layer image and two or more enhancement layer images according to a multilayer prediction structure.

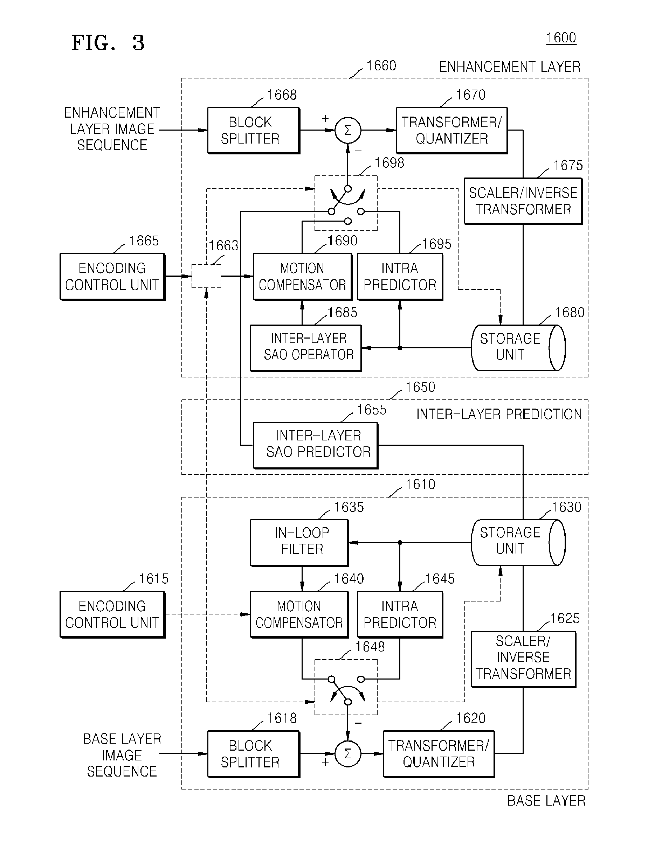

An inter-layer prediction structure will be described with reference to FIG. 3 later.

The scalable video encoding apparatus 10 according to one or more embodiments encodes each block of each image of video for each layer. A block may have a square shape, a rectangular shape, or an arbitrary geometrical shape, and is not limited to a data unit having a predetermined size. The block according to an embodiment may be a largest coding unit (LCU), a CU, a prediction unit, or a transformation unit among coding units according to a tree structure. The LCU including coding units having the tree structure is diversely referred to as a coding block unit, a block tree, a root block tree, a coding tree, a coding root or a tree trunk. Video encoding and decoding based on coding units having the tree structure will be described with reference to FIGS. 8 through 20 later.

Inter prediction and inter-layer prediction may be performed based on a data unit such as the CU, the prediction unit or the transformation unit.

The base layer encoder 12 according to one or more embodiments may perform source coding operations including inter prediction or intra prediction on base layer images to generate symbol data. For example, the base layer encoder 12 may perform inter prediction or intra prediction, transformation, and quantization on samples of the data unit of the base layer images, perform entropy encoding on the symbol data, and generate a bitstream as a base layer stream.

The enhancement layer encoder 14 may encode enhancement layer images based on coding units having the tree structure. The enhancement layer encoder 14 may perform inter and intra prediction, transformation, and quantization on samples of the CU of the enhancement layer images, generate symbol data, perform entropy encoding on the symbol data, and generate a bitstream and an enhancement layer stream.

The enhancement layer encoder 14 according to one or more embodiments may perform inter-layer prediction that predicts the enhancement layer images by using reconstructed samples of the base layer images. The enhancement layer encoder 14 may generate enhancement layer prediction images by using base layer reconstructed images and encode prediction errors between enhancement layer original images and the enhancement layer prediction images so as to encode the enhancement layer original images among enhancement layer image sequences by using an inter-layer prediction structure.

The enhancement layer encoder 14 may perform inter-layer prediction on the enhancement layers for each block such as the CU or the prediction unit. Blocks to be referred to by the enhancement layer images may determine in the base layer images. For example, blocks of a reconstructed image in the base layer images disposed corresponding to locations of a current blocks in the enhancement layer images may be determined as reference blocks in the base layer. Hereinafter, the blocks of reconstructed image in the base layer images may be referred to as 'base layer reconstructed blocks', and the current blocks in the enhancement layer images may be referred to as 'enhancement layer blocks'. The enhancement layer encoder 14 may determine enhancement layer prediction blocks by using base layer

EP 2 903 282 A1

reconstructed blocks corresponding to enhancement layer blocks.

The enhancement layer encoder 14 may use the enhancement layer prediction blocks determined by using the base layer reconstructed blocks according to the inter-layer prediction structure as reference images for enhancement layer original blocks in the enhancement layer. The enhancement layer encoder 14 may encode difference values between sample values of the enhancement layer prediction blocks and sample values of the enhancement layer original blocks, i.e. a residue component according to inter-layer prediction, as an SAO value by using the base layer reconstructed images.

As described above, the enhancement layer encoder 14 may encode a current layer image sequence by referring to the base layer reconstructed images by using the inter-layer prediction structure. However, the enhancement layer encoder 14 may encode the enhancement layer image sequences according to a single layer prediction structure without referring to other layer samples. Thus, the enhancement layer encoder 14 should not be construed as performing only inter-layer prediction so as to encode the enhancement layer image sequences.

The scalable video encoding apparatus 10 may use SAO parameters to compensate for encoding errors between original images and reconstructed images.

In more detail, the base layer encoder 12 may decode encoded samples according to coding units having the tree structure of the base layer images through inverse quantization, inverse transformation, inter prediction or motion compensation to reconstruct samples included in a current LCU. Reconstructed images of previous slices may be generated by encoding and then decoding the encoded samples. The reconstructed images of the previous slices may be referred to for inter prediction of a current slice.

The base layer encoder 12 may determine an offset indicating a difference value between original samples before the current LCU is encoded and reconstructed samples after the current LCU is decoded so as to minimize encoding errors between the original samples and the reconstructed samples.

The base layer encoder 12 may perform SAO adjustment for each color component. For example, SAO adjustment may be performed on an YCrCb color image for each of a luma component (Y component) and first and second chroma components (Cr and Cb components).

The base layer encoder 12 may determine a SAO type according to a sample value classification method of the current LCU. The SAO type according to an embodiment may be determined as an edge type or a band type. According to a sample value classification method of a current block, it may be determined whether to classify samples of the current block according to the edge type or the band type.

If the SAO type is the edge type, according to directions and shapes of edges formed between the reconstructed samples of the current LCU and their adjacent samples, an offset between the reconstructed samples and the original samples may be determined.

If the SAO type is the band type, among a plurality of bands obtained by dividing a total range of sample values of the reconstructed pixels of the current LCU, an offset between the reconstructed pixels and the original pixels included in each band may be determined. The bands may be obtained by uniformly or ununiformly dividing the total range of the sample values.

Accordingly, the base layer encoder 12 may determine the SAO type of the current LCU indicating the edge type or the band type based on spatial characteristics of sample values of the current LCU.

The base layer encoder 12 may determine an SAO class of each of the reconstructed samples according to the SAO type of the current LCU. The SAO class according to an embodiment may be determined as an edge class or a band class.

With respect to the edge type, the edge class according to an embodiment may indicate directions of edges formed between the reconstructed samples and their adjacent samples. The edge class according to an embodiment may indicate an edge direction of 0°, 90°, 45°, or 135°.

If the SAO type is the edge type, the base layer encoder 12 may determine the edge class of each of the reconstructed samples of the current LCU.

With respect to the band type, when a total range of sample values of the current LCU is divided into a predetermined number of continuous sample value periods, each of the continuous sample value periods may refer to a band. A band class according to an embodiment may indicate positions of bands to which sample values of the reconstructed pixels belong.

For example, with respect to a sample having a sample value of 8 bits, a total range of the sample value is from 0 to 255 and the sample value may be classified into a total of 32 bands. In this case, among the total of 32 bands, a predetermined number of bands to which sample values of the reconstructed pixels belong may be determined. The band class according to an embodiment may indicate a position, i.e. a leftmost band, of a start band to which the sample values belong from among a predetermined number of continuous bands. The start band position to which the sample values belong may be expressed as band indices from 0 to 31.

With respect to the edge type, the reconstructed samples of the current LCU may be classified into a predetermined number of categories according to the shape of edges formed between the reconstructed samples and their adjacent samples. For example, according to four edge shapes such as a local valley of a concave edge, a curved corner of a concave edge, a curved corner of a convex edge, and a local peak of a convex edge, the reconstructed samples may be classified into four categories. According to an edge shape of each of the reconstructed samples of the current LCU, it may be determined that each of the reconstructed samples belongs to one of the four categories.

With respect to the band type, according to positions of bands to which sample values of the reconstructed samples of the current LCU belong, the reconstructed samples may be classified into a predetermined number of categories. For example, according to band indices of four continuous bands from a start band position indicated by the band class, i.e., a start point of the leftmost band, the reconstructed samples may be classified into four categories. According to one of the four bands to which each of the reconstructed samples of the current LCU respectively belongs, it may be determined which one of the four categories each of the reconstructed samples respectively belongs to.

The base layer encoder 12 may determine a category of each of the reconstructed samples of the current LCU. With respect to the reconstructed samples of the current LCU which belong to the same category, the base layer encoder 12 may determine offset values by using difference values between the reconstructed samples and the original samples. In each category, an average of the difference values between the reconstructed samples and the original samples, i.e., an average error of the reconstructed samples, may be determined as an offset value assigned to a current category. The base layer encoder 12 may determine an offset value of each category and may determine offset values of all categories as the offset values of the current LCU.

For example, when the SAO type of the current LCU is the edge type, the reconstructed samples of the current LCU are classified into four categories according to edge shapes. When the SAO type of the current LCU is the band type, the reconstructed samples of the current LCU are classified into four categories according to indices of four continuous bands. In this case, the base layer encoder 12 may determine four offset values by determining which one of four categories an average error between the reconstructed samples and the original samples belongs to.

Each of the offset values may be greater than or equal to a preset minimum value and may be less than or equal to a preset maximum value.

The base layer encoder 12 may encode and output SAO parameters including the SAO type, the SAO class, and the offset values of the current LCU.

The SAO parameters of each block may include an SAO type and offset values of the block. As the SAO type, an off type, the edge type, or the band type may be output.

If the SAO type is the off type, it may be indicated that SAO adjustment is not to be applied to the current LCU. In this case, remaining SAO parameters of the current LCU do not need to be encoded.

If the SAO type is the edge type, the SAO parameters may include offset values individually corresponding to edge classes. Otherwise, if the SAO type is the band type, the SAO parameters may include offset values individually corresponding to bands.

As described above, the base layer encoder 12 may perform an SAO operation on each of LCUs of an image.

The enhancement layer encoder 14 according to one or more embodiments may encode prediction errors, i.e. residue components, between the enhancement layer prediction blocks and the enhancement layer original blocks according to the inter-layer prediction structure by using the SAO parameters.

The base layer encoder 12 may use the SAO parameters to perform post-processing for minimizing the encoding errors between the reconstructed images and the original images after the base layer images are encoded, whereas the enhancement layer encoder 14 may use inter-layer SAO parameters to encode prediction errors between the enhancement layer images and base layer reference images according to the inter-layer prediction structure.

The enhancement layer encoder 14 may generate the enhancement layer prediction images for predicting the enhancement layer images. When the enhancement layer encoder 14 follows the inter-layer prediction structure, the enhancement layer prediction images may be generated by using the base layer reconstructed images.

The inter-layer offset determiner 16 may determine prediction errors in samples between the enhancement layer prediction images and the enhancement layer original images for each pixel location of the enhancement layer images. The inter-layer offset determiner 16 may determine SAO types of the enhancement layer prediction images and offsets determined by classifying the prediction errors according to categories based on a distribution of sample values of the enhancement layer prediction images.

The inter-layer SAO parameter determiner 18 may determine inter-layer SAO use information indicating whether inter-layer prediction errors between the base layer reconstructed images and the enhancement layer prediction images are compensated for. The inter-layer SAO parameter determiner 18 may also determine SAO parameters indicating SAO types and offsets for the enhancement layer prediction images.

Inter-layer SAO parameters may include information regarding SAO types, classes, categories, and offsets to encode the inter-layer prediction errors, similarly to the SAO parameters of the base layer images. In the present specification, the SAO parameters for the enhancement layer images on which inter-layer prediction is performed may be construed as the inter-layer SAO parameters.

An operation of the scalable video encoding apparatus 10 will now be described with reference to FIG. 1B below.

In operation 11, the inter-layer offset determiner 16 may determine prediction errors in samples between the enhancement layer prediction images and the enhancement layer original images for each pixel location of the enhancement layer images.

The base layer encoder 12 may generate base layer reconstructed images during a process of encoding base layer image sequences. The enhancement layer encoder 14 may determine enhancement layer prediction images by using the base layer reconstructed images.

According to a scalable video prediction structure according to an embodiment, base layer images and enhancement layer images may differ in terms of resolution. The enhancement layer encoder 14 may interpolate the base layer reconstructed images obtained from the base layer encoder 12 so as to resize the base layer reconstructed images to have the same resolution as enhancement layer original images. The enhancement layer encoder 14 may determine and use the interpolated base layer reconstructed images as enhancement layer prediction images.

In operation 13, the inter-layer offset determiner 16 may determine SAO types of the enhancement layer prediction images and offsets according to categories based on a distribution of sample values of the enhancement layer prediction images.

SAO types used for a SAO operation for base layer images and SAO categories according to the SAO types may be applied to inter-layer SAOs.

The inter-layer offset determiner 16 may determine the SAO types by determining whether a current sample is an edge type or a band type based on a distribution of sample values for each pixel location of enhancement layer images. The SAO types may be determined for each block of the enhancement layer images.

If the SAO types are determined, the SAO categories to which sample errors between enhancement layer prediction blocks and enhancement layer original blocks belong may be determined for each block pixel location. If the SAO types are edge types, the SAO categories may be determined according to edge shapes. If the SAO types are band types, the SAO categories may be determined based on a sample value range.

An average of sample errors according to the SAO categories may be determined. An average error may be determined as an offset according to the SAO categories.

The enhancement layer encoder 14 may compensate for offsets with respect to enhancement layer prediction images according to inter-layer SAOs and generate enhancement layer reconstructed images by referring to the compensated enhancement layer prediction images.

In operation 15, the inter-layer SAO parameter determiner 18 may determine inter-layer SAO use information and SAO parameters for enhancement layer images.

The inter-layer SAO parameter determiner 18 may determine SAO parameters sequentially including SAO types of enhancement layer prediction images, offsets according to categories, and information regarding marks of offsets.

Offsets according to inter-layer SAOs of one or more embodiments, i.e., signs of inter-layer SAO offsets, may be determined based on at least one of SAO types, categories, and resolution ratios between base layer images and enhancement layer images. In this case, the inter-layer SAO parameter determiner 18 may not include the information regarding marks of offsets in the SAO parameters.

The inter-layer offset determiner 16 may limit offsets determined according to categories below a predetermined maximum absolute value. A maximum absolute value of offsets according to inter-layer SAOs according to one or more embodiments may be determined in advance based on at least one of SAO types, categories, and resolution ratios between base layer images and enhancement layer images.

The inter-layer offset determiner 16 may consequently determine offsets according to two or more categories for each sample of enhancement layer prediction images. Enhancement layer reconstructed images may be generated by referring to prediction images obtained by consequently compensating enhancement layer prediction images for offsets according to categories.

For example, the inter-layer offset determiner 16 may compare sample values of adjacent pixels in a perpendicular direction of a current pixel of an enhancement layer prediction image with a sample value of the current pixel to determine that the current sample belongs to a first category. The inter-layer offset determiner 16 may correct the sample value of the current pixel by a first offset according to the first category. The inter-layer offset determiner 16 may compare the sample value of the current pixel with sample values of adjacent pixels in a horizontal direction of the current pixel again to determine that the current sample belongs to a second category. Thus, according to inter-layer SAOs of one or more embodiments, a single sample may belong to two or more categories, and thus two or more offsets may be determined for a single sample.

The inter-layer offset determiner 16 according to one or more embodiments may limit an offset of a predetermined category among categories according to SAO types as 0. In this case, the inter-layer SAO parameter determiner 18 may determine SAO parameters including information regarding offsets excluding the offset limited as 0.

The inter-layer offset determiner 16 according to one or more embodiments may determine offsets according to inter-layer SAOs only with respect to enhancement layer regions predicted by using base layer regions, among base layer reconstructed images, according to one of prediction modes including an intra base layer prediction mode Intra BL mode and a differential prediction mode Diff mode, among enhancement layer prediction images. According to the intra base layer prediction mode Intra BL mode, enhancement layer data units may be predicted by using base layer data units predicted in an intra mode. According to the differential prediction mode Diff mode, enhancement layer data units may be predicted by using base layer data units predicted in an inter mode. Differential components generated according to a predetermined data unit on which inter-layer prediction is performed may be encoded as inter-layer SAO offsets. For convenience of description, although a base layer prediction mode or a differential prediction mode is used as a prediction mode of base layer data units, the prediction mode of the base layer data units that is referred to for inter-layer prediction is not limited thereto.

That is, inter-layer SAOs may not be determined with respect to enhancement layer blocks that are encoded through single layer prediction without following an inter-layer prediction structure.

The inter-layer offset determiner 16 according to one or more embodiments may additionally determine SAO categories based on at least one of a resolution ratio between base layer images and enhancement layer images, a phase shift of an interpolation filter for resizing base layer reconstructed images to have the same resolution as that of enhancement layer original images, and a filtering order of the interpolation filter. That is, SAO categories according to inter-layer SAOs may further include at least one of a resolution ratio between layers, a phase shift of an interpolation filter, and an interpolation filtering order as well as edge shapes of edge types or a sample value range of band types.

The inter-layer offset determiner 16 according to one or more embodiments may determine SAO types and offsets for a current region of enhancement layer prediction images by using SAO parameters in a collocated region of base layer images located corresponding to the current region of enhancement layer prediction images.

The inter-layer SAO parameter determiner 18 according to one or more embodiments may determine base layer SAO merge information indicating whether to determine SAO offsets for enhancement layer prediction images by using SAO parameters in the collocated region of base layer images. The inter-layer SAO parameter determiner 18 may output SAO parameters including the base layer SAO merge information.

For example, if the base layer SAO merge information indicates that SAO parameters for enhancement layer prediction images are determined by using every piece of information of SAO parameters in the collocated region of base layer images, SAO parameters for enhancement layer prediction images may not be encoded.

For example, the inter-layer offset determiner 16 may determine some SAO parameters for the current region of enhancement layer prediction images by using some SAO parameters in the collocated region of base layer images. In this case, SAO parameters for an enhancement layer current region may not include some parameters determined by using SAO parameters in a base layer collocated region.

In more detail, the inter-layer offset determiner 16 may determine SAO types of inter-layer SAOs for the current region of enhancement layer prediction images by using SAO types in the collocated region of base layer images located corresponding to the current region of enhancement layer prediction images. In this case, inter-layer SAO parameters for the current region may include the base layer SAO merge information and SAO offsets and may not include SAO types.

The scalable video encoding apparatus 10 according to one or more embodiments may include a central processor (not shown) for collectively controlling the base layer encoder 12, the enhancement layer encoder 14, the inter-layer offset determiner 16, and the inter-layer SAO parameter determiner 18. Alternatively, the base layer encoder 12, the enhancement layer encoder 14, the inter-layer offset determiner 16, and the inter-layer SAO parameter determiner 18 may be driven by their individual processors (not shown) that cooperatively operate to control the scalable video encoding apparatus 10. Alternatively, an external processor (not shown) outside the scalable video encoding apparatus 10 may control the base layer encoder 12, the enhancement layer encoder 14, the inter-layer offset determiner 16, and the inter-layer SAO parameter determiner 18.

The scalable video encoding apparatus 10 may include one or more data storage units (not shown) for storing input and output data of the base layer encoder 12, the enhancement layer encoder 14, the inter-layer offset determiner 16, and the inter-layer SAO parameter determiner 18. The scalable video encoding apparatus 10 may include a memory controller (not shown) for managing data input and output to and from the data storage units.

In order to perform a video encoding operation including transformation and to output a result of the video encoding operation, the scalable video encoding apparatus 10 may operate in association with an internal or external video encoding processor. The internal video encoding processor of the scalable video encoding apparatus 10 may be an independent processor for performing a video encoding operation. Also, the scalable video encoding apparatus 10, a central processing unit (CPU), or a graphic processing unit (GPU) may include a video encoding processor module to perform a base video encoding operation.

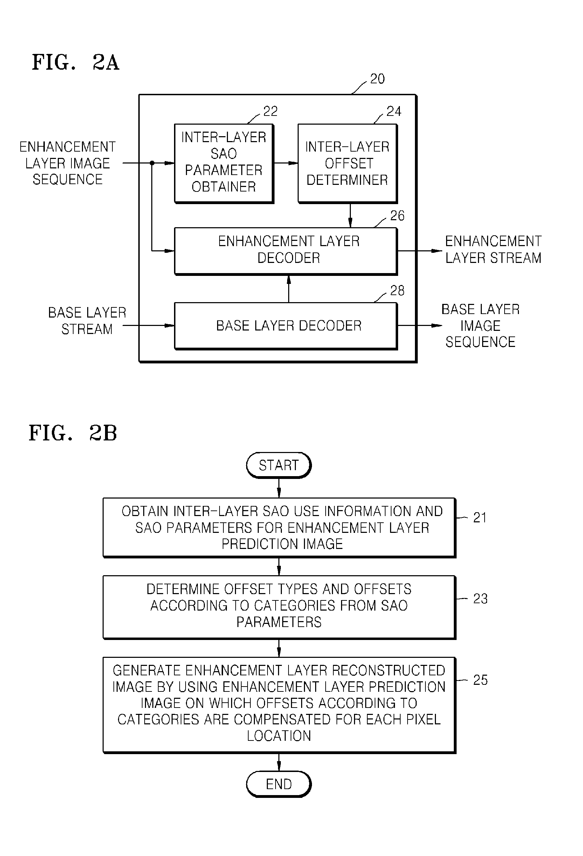

FIGS. 2A and 2B are a block diagram of a scalable video decoding apparatus 20 and a flowchart of a scalable video decoding method, respectively, according to one or more embodiments.

The scalable video decoding apparatus 20 according to one or more embodiments includes an inter-layer SAO parameter obtainer 22, an inter-layer offset determiner 24, an enhancement layer decoder 26, and a base layer decoder 28.

The scalable video decoding apparatus 20 according to one or more embodiments may receive bitstreams according to layers by using a scalable encoding method. The number of layers of bitstreams received by the scalable video decoding apparatus 20 is not limited. However, for convenience of description, an embodiment in which the base layer decoder 28 of the scalable video decoding apparatus 20 receives and decodes base layer streams, and the enhancement layer decoder 26 thereof receives and decodes enhancement layer streams, is described.

For example, the scalable video decoding apparatus 20 based on spatial scalability may receive streams that are decoded as different layers having image sequences with different resolutions. Low resolution image sequences may be reconstructed by decoding base layer streams, and high resolution image sequences may be reconstructed by decoding enhancement layer streams.

As another example, multi-view video may be decoded according to scalable video coding. When stereoscopic video streams are received as a plurality of layers, left view images may be reconstructed by decoding base layer streams. Right view images may be reconstructed by further decoding enhancement layer streams based on base layer streams.

Alternatively, when multi-view video streams are received as a plurality of layers, center view images may be reconstructed by decoding base layer streams. Left view images may be reconstructed by further decoding first enhancement layer streams based on base layer streams. Right view images may be reconstructed by further decoding second enhancement layer streams based on base layer streams.

As another example, temporal scalability based scalable video coding may be performed. Images of base frame rates may be reconstructed by decoding base layer streams. Images of high frame rates may be reconstructed by further decoding enhancement layer streams based on base layer streams.

When there are three or more enhancement layers, first enhancement layer images may be reconstructed from first enhancement layer streams with respect to first enhancement layers, and second enhancement layer images may be further reconstructed by further decoding second enhancement layer streams. Kth enhancement layer images may be further reconstructed by further decoding Kth enhancement layer streams based on first enhancement layer streams.

The scalable video decoding apparatus 20 may obtain encoded data of base layer images and enhancement layer images from base layer streams and enhancement layer streams, and may further obtain motion vectors generated through inter prediction and prediction information generated through inter-layer prediction.

For example, the scalable video decoding apparatus 20 may decode inter predicted data for each layer, and decode inter-layer predicted data between a plurality of layers. Reconstruction of images may be performed through motion compensation and inter-layer decoding based on CUs or prediction units according to an embodiment.

Motion compensation is performed on a current image by referring to reconstructed images predicted through inter prediction of a same layer with respect to each layer stream, and thus images may be reconstructed. Motion compensation means an operation of reconfiguring a reconstructed image of a current image by combining residue components of the current image and a reference image determined by using a motion vector of the current image.

The scalable video decoding apparatus 20 according to an embodiment may perform inter-layer decoding by referring to base layer images to reconstruct enhancement layer images predicted through inter-layer prediction. Inter-layer decoding means an operation of generating a reconstructed image of a current image by combining residue components of the current image and reference images of other layers determined to predict the current image.

The scalable video decoding apparatus 20 according to an embodiment may perform inter-layer decoding to reconstruct second enhancement layer images predicted by referring to first enhancement layer images. An inter-layer prediction structure will be described with reference to FIG. 3 later.

However, the enhancement layer decoder 26 according to one or more embodiments may decode enhancement layer streams by not referring to base layer image sequences. Thus, the enhancement layer decoder 26 should not be construed as performing only inter-layer prediction so as to encode enhancement layer image sequences.

The scalable video decoding apparatus 20 decodes each image of video for each block. A block according to an embodiment may be a LCU, a CU, a prediction unit, or a transformation unit among coding units according to a tree structure.

The base layer decoder 28 may decode base layer images by using encoding symbols of parsed base layer images. If the scalable video decoding apparatus 20 receives streams encoded based on coding units having the tree structure, the base layer decoder 28 may perform decoding based on coding units having the tree structure for each LCU of base layer streams.

The base layer decoder 28 may obtain encoding information and encoded data by performing entropy decoding on each LCU. The base layer decoder 28 may reconstruct residue components by performing inverse quantization and inverse transformation on the encoded data obtained from streams. The base layer decoder 28 according to another embodiment may directly receive bitstreams of quantized transformation coefficients. Residue components of images may be reconstructed as a result of performing inverse quantization and inverse transformation on quantized transformation coefficients.

The base layer decoder 28 may reconstruct base layer images by combining prediction images and residue components by performing motion compensation on same layer images.

The enhancement layer decoder 26 may generate enhancement layer prediction images by using samples of base layer reconstructed images according to an inter-layer prediction structure. The enhancement layer decoder 26 may obtain prediction errors cased by inter-layer prediction by decoding enhancement layer streams. The enhancement layer decoder 26 may generate enhancement layer reconstructed images by combining enhancement layer prediction images and prediction errors.

The base layer decoder 28 according to one or more embodiments may compensate for encoding errors between base layer original images and base layer reconstructed images by obtaining SAO parameters from base layer streams. Information and concepts related to SAO parameters, SAO types, classes, and categories are the same as described with reference to FIG. 1A above.

In more detail, the base layer decoder 28 may reconstruct samples included in a current LCU by decoding samples encoded according to coding units having the tree structure of base layer images through inverse quantization, inverse transformation, inter prediction, or motion compensation. Reconstructed images may be generated by encoding and then decoding previous slices of encoded samples. Reconstructed images of a previous slice may be referred to so as to perform inter prediction on a current slice. Thus, reconstructed images of the previous slice may be used as prediction images for the current slice.

The base layer decoder 28 may obtain SAO parameters for a current LCU from base layer streams and determine whether SAO parameters are off, edge, or band types based on SAO types among SAO parameters.

The base layer decoder 28 may obtain offsets according to categories from SAO parameters. The base layer decoder 28 may determine a category to which each reconstructed sample of a current block among prediction images belongs, from among categories according to SAO types. Thus, the base layer decoder 28 may compensate for encoding errors of base layer reconstructed images by combining sample values and offsets according to categories determined for each reconstructed sample.

The enhancement layer decoder 26 according to one or more embodiments may obtain prediction errors, i.e. residue components, between enhancement layer prediction blocks and enhancement layer original blocks according to the inter-layer prediction structure from SAO parameters.

The base layer decoder 28 may perform a SAO operation as a post-processing operation for compensating for errors between reconstructed images and original images after base layer images are predicted, whereas the enhancement layer decoder 26 may perform an inter-layer SAO operation to determine prediction images that are to be referred to so as to predict enhancement layer images according to the inter-layer prediction structure. That is, SAO offsets may be used as inter-layer prediction errors, i.e. residue components according to inter-layer prediction.

An operation of the scalable video decoding apparatus 20 will now be described with reference to FIG. 2B below.

In operation 21, the inter-layer SAO parameter obtainer 22 may obtain inter-layer SAO use information and SAO parameters from received enhancement layer streams. The enhancement layer decoder 26 may determine whether to compensate for inter-layer prediction errors between base layer reconstructed images and enhancement layer prediction images based on the inter-layer SAO use information.

In operation 23, the inter-layer offset determiner 24 may determine SAO types of enhancement layer prediction images and offsets determined by classifying inter-layer prediction errors according to categories from SAO parameters.

The inter-layer offset determiner 24 may sequentially determine SAO types of enhancement layer prediction images, offsets according to categories, and signs of offsets based on SAO parameters. When SAO parameters do not include information regarding signs of offsets, the inter-layer offset determiner 24 may determine signs of offsets based on at least one of SAO types, categories, and resolution ratios between layers.

The inter-layer offset determiner 24 may obtain offsets that are limited below a maximum absolute value from SAO parameters.

The inter-layer offset determiner 24 may determine two or more categories for each sample of enhancement layer prediction images to obtain offsets according to corresponding two or more categories from SAO parameters. In this case, the enhancement layer decoder 26 may renew enhancement layer prediction images by consequently combining samples of enhancement layer prediction images and offsets according to two or more categories so as to apply inter-layer SAOs to enhancement layer prediction images.

In more detail, the inter-layer offset determiner 24 may obtain information indicating edge types and offsets according to categories based on edge shapes from SAO parameters of enhancement layer prediction images.

The inter-layer offset determiner 24 may compare sample values of adjacent pixels in a perpendicular direction of a current pixel of enhancement layer prediction images with a sample value of a current pixel and determine that the current pixel belongs to a first category. The enhancement layer decoder 26 may correct the sample value of the current pixel by combining the sample value of the current pixel and a first offset according to the first category.

The inter-layer offset determiner 24 may compare sample values of adjacent pixels in a horizontal direction of the current pixel of enhancement layer prediction images with the sample value of the current pixel and determine that the current pixel belongs to a second category. The inter-layer offset determiner 24 may additionally combine the sample value of the current pixel corrected by using the first offset according to the first category and a second offset according to the second category to correct the sample value of the current pixel again. Accordingly, when a plurality of categories are determined with respect to a single sample, a sample value may be consequently compensated by using offsets according to categories.

The inter-layer offset determiner 24 may determine an offset of a predetermined category as 0 when SAO parameters do not include the offset of the corresponding category.

Although inter-layer prediction errors are compensated for based on the inter-layer SAO use information, the inter-layer offset determiner 24 may determine inter-layer SAO offsets only with respect to enhancement layer regions predicted by using base layer reconstructed images according to one of prediction modes including an intra base layer prediction mode Intra BL mode and a differential prediction mode Diff mode, among enhancement layer prediction images. That is, the inter-layer offset determiner 24 may determine differential components according to inter-layer prediction as inter-layer SAO offsets only with respect to enhancement layer data units reconstructed by using base layer data units according to a predetermined prediction mode.

According to one or more embodiments, categories may be classified according to shapes of edges to which samples of edge types belong or according to a range of sample values to which samples of band types belong. Also, sample categories may be classified based on at least one of resolution ratios between layers in the inter-layer prediction structure, phase shifts of interpolation filters, and filtering orders of interpolation filters.

The inter-layer SAO parameter obtainer 22 according to one or more embodiments may obtain base layer SAO merge information indicating whether to determine SAO parameters for enhancement layer prediction images by using SAO parameters in a collocated region of base layer images from enhancement layer streams.

For example, the inter-layer SAO parameter obtainer 22 may determine SAO parameters for a current region among enhancement layer prediction images by using SAO parameters in the collocated region of base layer images located corresponding to the current region based on the base layer SAO merge information.

If the inter-layer SAO parameter obtainer 22 determines SAO parameters of a current image of enhancement layer images by using every piece of information of SAO parameters in the collocated region of base layer images based on the base layer SAO merge information, the inter-layer SAO parameter obtainer 22 may not directly obtain SAO parameters for the current image of enhancement layer images from enhancement layer streams.

The inter-layer offset determiner 24 may determine information regarding at least one of SAO parameters for the current image of enhancement layer prediction images by using information regarding at least one of SAO parameters in the collocated region of base layer images.

For example, the inter-layer SAO parameter obtainer 22 may determine SAO types of offsets for the current region of enhancement layer prediction images by using SAO types in the collocated region of base layer images.

In operation 25, the enhancement layer decoder 26 may determine a category of a current sample for each pixel location of enhancement layer prediction images and compensate for the current sample by using an offset for a current category from among offsets obtained from SAO parameters. The enhancement layer decoder 26 may compensate for samples of enhancement layer prediction images by using each offset, to generate enhancement layer reconstructed images.

The enhancement layer decoder 26 may determine enhancement layer prediction images by using base layer reconstructed images decoded by the base layer decoder 28. The enhancement layer decoder 26 may determine blocks of base layer images to which blocks such as CUs of enhancement layer images or prediction units are to refer, according to the inter-layer prediction structure. For example, reconstructed blocks of base layer images located corresponding to a location of the current block of enhancement layer image may be determined. The enhancement layer decoder 26 may determine enhancement layer prediction blocks by using base layer reconstructed blocks corresponding to enhancement layer blocks.

The enhancement layer decoder 26 according to an embodiment may use enhancement layer prediction blocks determined by using base layer reconstructed blocks according to the inter-layer prediction structure as reference images for inter-layer prediction of enhancement layer original blocks. In this case, the enhancement layer decoder 26 may reconstruct enhancement layer blocks by combining sample values of enhancement layer prediction blocks determined by using base layer reconstructed images and offsets obtained from SAO parameters, i.e. residue components according to inter-layer prediction.

According to spatial scalable video coding, when the base layer decoder 28 reconstructs base layer images having different resolutions from those of enhancement layer images, the enhancement layer decoder 26 may interpolate base layer reconstructed images to resize base layer reconstructed images to have the same resolution as enhancement layer original images. Interpolated base layer reconstructed images may be determined as enhancement layer prediction images for inter-layer prediction.

Therefore, the base layer decoder 28 of the scalable video decoding apparatus 20 may decode base layer streams and reconstruct base layer image sequences, and the enhancement layer decoder 26 thereof may decode enhancement layer streams and reconstruct enhancement layer image sequences.

The scalable video decoding apparatus 20 according to one or more embodiments may include a central processor (not shown) for collectively controlling the inter-layer SAO parameter obtainer 22, the inter-layer offset determiner 24, the enhancement layer decoder 26, and the base layer decoder 28. Alternatively, the inter-layer SAO parameter obtainer 22, the inter-layer offset determiner 24, the enhancement layer decoder 26, and the base layer decoder 28 may be driven by their own individual processors (not shown) that cooperatively operate to control the scalable video decoding apparatus 20. Alternatively, an external processor (not shown) outside the scalable video decoding apparatus 10 may control the inter-layer SAO parameter obtainer 22, the inter-layer offset determiner 24, the enhancement layer decoder 26, and the base layer decoder 28.

The scalable video decoding apparatus 20 may include one or more data storage units (not shown) for storing input and output data of the inter-layer SAO parameter obtainer 22, the inter-layer offset determiner 24, the enhancement layer decoder 26, and the base layer decoder 28. The scalable video decoding apparatus 20 may include a memory controller (not shown) for managing data input and output to and from the data storage units.

In order to perform a video decoding operation including transformation and to output a result of the video decoding operation, the scalable video decoding apparatus 20 may operate in association with an internal or external video decoding processor. The internal video decoding processor of the scalable video decoding apparatus 20 may be an independent processor for performing a video decoding operation. Also, the scalable video decoding apparatus 20, a CPU, or a GPU may include a video decoding processor module to perform a base video decoding operation.

According to the scalable video encoding apparatus 10 according to one or more embodiments described with reference to FIGS. 1A and 1B, inter-layer prediction errors for predicting enhancement layer images may be encoded by using SAO parameters. Thus, without having to encode inter-layer prediction errors according to pixel locations, inter-layer prediction errors may be encoded by using SAO types determined based on a distribution of sample values of prediction errors and information regarding offsets according to categories.

The scalable video decoding apparatus 20, according to one or more embodiments described with reference to FIGS. 2A and 2B, may obtain SAO types and offsets from received bitstreams and determine SAO categories according to a distribution of sample values for each pixel of enhancement layer prediction layers, and thus an offset assigned to SAO categories to which a each pixel belongs may be obtained by using SAO types and offsets.? Therefore, without receiving inter-layer prediction errors for each pixel, each pixel of enhancement layer prediction images is compensated for offsets according to corresponding categories, and thus enhancement layer reconstructed images may be generated.

An inter-layer prediction structure that may be implemented by the enhancement layer decoder 14 of the scalable video encoding apparatus 10 according to one or more embodiments will now be described in detail with reference to FIG. 3.

FIG. 3 is a block diagram of an inter-layer prediction structure, according to one or more embodiments.

An inter-layer encoding system 1600 includes a base layer encoding end 1610, an enhancement layer encoding end 1660, and an inter-layer prediction end 1650 between the base layer encoding end 1610 and the enhancement layer encoding end 1660. The base layer encoding end 1610 and the enhancement layer encoding end 1660 may illustrate detailed structures of a base layer encoder 1410 and an enhancement layer encoder 1420, respectively.

The base layer encoding end 1610 receives an input of a base layer image sequence and encodes each image sequence. The enhancement layer encoding end 1660 receives an input of an enhancement layer image sequence and encodes each image sequence. Common operations performed by both the base layer encoding end 1610 and the enhancement layer encoding end 1660 will be concurrently described later.

Block splitters 1618 and 1668 split the input images (a low resolution image and a high resolution image) into LCUs, coding units, prediction units, and transformation units. To encode the coding units output from the block splitters 1618 and 1668, intra prediction or inter prediction may be performed for each prediction unit of the coding units. Prediction switches 1648 and 1698 may perform inter prediction by referring to a previously reconstructed image output from motion compensators 1640 and 1690 or may perform intra prediction by using a neighboring prediction unit of a current prediction unit within a current input image output from intra predictors 1645 and 1695, according to whether a prediction mode of each prediction unit is an intra prediction mode or an inter prediction mode. Residual information may be generated for each prediction unit through inter prediction.

Residue components between the prediction units and peripheral images are input to transformers/quantizers 1620 and 1670 for each prediction unit of the coding units. The transformers/quantizers 1620 and 1670 may perform transformation and quantization on each transformation unit and output quantized transformation coefficients based on transformation units of the coding units.

Scalers/inverse transformers 1625 and 1675 may perform scaling and inverse transformation on the quantized coefficients for each transformation unit of the coding units again and generate residual information of a spatial domain. In a case where the prediction switches 1648 and 1698 is controlled to the inter mode, the residue components may be combined with the previous reconstructed image or the neighboring prediction unit so that a reconstructed image including the current prediction unit may be generated and a current reconstructed image may be stored in storage units 1630 and 1680. The current reconstructed image may be transferred to the intra predictors 1645 and 1695 and the motion compensators 1640 and 1690 again according to a prediction mode of a prediction unit that is to be encoded next.

In particular, in the inter mode, an in-loop filter 1635 may perform at least one of deblocking filtering, a SAO operation, and adaptive loop filtering (ALF) on the current reconstructed image stored in the storage units 1630 and 1680 for each coding unit. At least one of the deblocking filtering, the SAO operation, and the ALF filtering may be performed on at least one of the coding units, the prediction units included in the coding units, and the transformation units.

The deblocking filtering is for reducing blocking artifacts of data units. The SAO operation is for compensating for a pixel value modified by data encoding and decoding. Data filtered by the in-loop filter 1635 may be transferred to the motion compensators 1640 and 1690 for each prediction unit. To encode the coding unit having a next sequence that is output from the block splitters 1618 and 1668 again, residue components between the current reconstructed image and the next coding unit that are output from the motion compensators 1618 and 1668 and the block splitters 1618 and 1668 may be generated.

The above-described encoding operation for each coding unit of the input images may be repeatedly performed in the same manner as described above.

The enhancement layer encoding end 1660 may refer to the reconstructed image stored in the storage unit 1630 of the base layer encoding end 1610 for the inter-layer prediction. An encoding control unit 1615 of the base layer encoding end 1610 may control the storage unit 1630 of the base layer encoding end 1610 and transfer the reconstructed image of the base layer encoding end 1610 to the enhancement layer encoding end 1660. The transferred base layer reconstructed image may be used as an enhancement layer prediction image.

In a case where a base layer image and an enhancement layer image have different resolutions, an inter-layer SAO predictor 1655 of the inter-layer prediction end 1650 may up-sample and transfer a base layer reconstructed image to the enhancement layer encoding end 1660. Thus, the up-sampled base layer reconstructed image may be used as the enhancement layer prediction image.

In a case where inter-layer prediction is performed according to control of the switch 1698 of an encoding control unit 1665 of the enhancement layer encoding end 1660, inter-layer prediction of the enhancement layer image may be performed by referring to the base layer reconstructed image transferred through the inter-layer prediction end 1650.

For image encoding, diverse coding modes may be set for the coding units, prediction units, and transformation units. For example, a depth or a split flag may be set as a coding mode for the coding units. At least one of A prediction mode, a partition type, an intra direction flag, and a reference list flag may be set as a coding mode for the prediction units. The transformation depth or the split flag may be set as a coding mode of the transformation units.

The base layer encoding end 1610 may determine a coding depth, a prediction mode, a partition type, an intra direction and reference list, and a transformation depth having the highest coding efficiency according to a result obtained by performing encoding by applying diverse depths for the coding units, diverse prediction modes for the prediction units, diverse partition types, diverse intra directions, diverse reference lists, and diverse transformation depths for the transformation units. However, the present disclosure is not limited to the above-described coding modes determined by the lower layer encoding end 1610.

An encoding control unit 1615 of the base layer encoding end 1610 may control diverse coding modes to be appropriately applied to operations of elements. For inter-layer video encoding of the enhancement layer encoding end 1660, the encoding control unit 1615 may control the enhancement layer encoding end 1660 to determine a coding mode or residue components by referring to the encoding result of the base layer encoding end 1610.

For example, the enhancement layer encoding end 1660 may use the coding mode of the base layer encoding end 1610 as a coding mode of the enhancement layer image or may determine the coding mode of the enhancement layer image by referring to the coding mode of the base layer encoding end 1610. The encoding control unit 1615 of the base layer encoding end 1610 may control a control signal of the encoding control unit 1615 of the base layer encoding end 1610 and, to determine a current coding mode of the enhancement layer encoding end 1660, may use the current coding mode based on the coding mode of the base layer encoding end 1610.

In particular, the enhancement layer encoding end 1660 according to an embodiment may encode an inter-layer prediction error by using SAO parameters. Thus, a prediction error between the enhancement layer prediction image determined from the base layer reconstructed image and the enhancement layer reconstructed image may be encoded as an offset of the SAO parameters.

Similarly to the inter-layer encoding system 1600 according to the inter-layer prediction method of FIG. 3, an inter-layer decoding system according to the inter-layer prediction method may be also implemented. That is, the inter-layer decoding system may receive a base layer bitstream and an enhancement layer bitstream. A base layer decoding end of the inter-layer decoding system may decode the base layer bitstream to generate base layer reconstructed images. An enhancement layer decoding end of the inter-layer decoding system may decode the enhancement layer bitstream to generate enhancement layer reconstructed images.

If the base layer encoder 12 of the scalable video encoding apparatus 10 according to one or more embodiments performs inter-layer prediction, the enhancement layer decoder 26 of the scalable video decoding apparatus 20 may generate multilayer reconstructed images according to the above-described inter-layer decoding system.

If the inter-layer encoding system 1600 encodes the inter-layer prediction error by using the SAO parameter, the inter-layer decoding system may obtain SAO parameters from an enhancement layer stream and determine SAO types and offsets according to categories among the SAO parameters. The inter-layer decoding system may determine categories for each sample based on a sample distribution of the enhancement layer prediction image determined from the base layer reconstructed image. Thus, the inter-layer decoding system may generate enhancement layer reconstructed images by compensating sample values for offsets of corresponding categories.

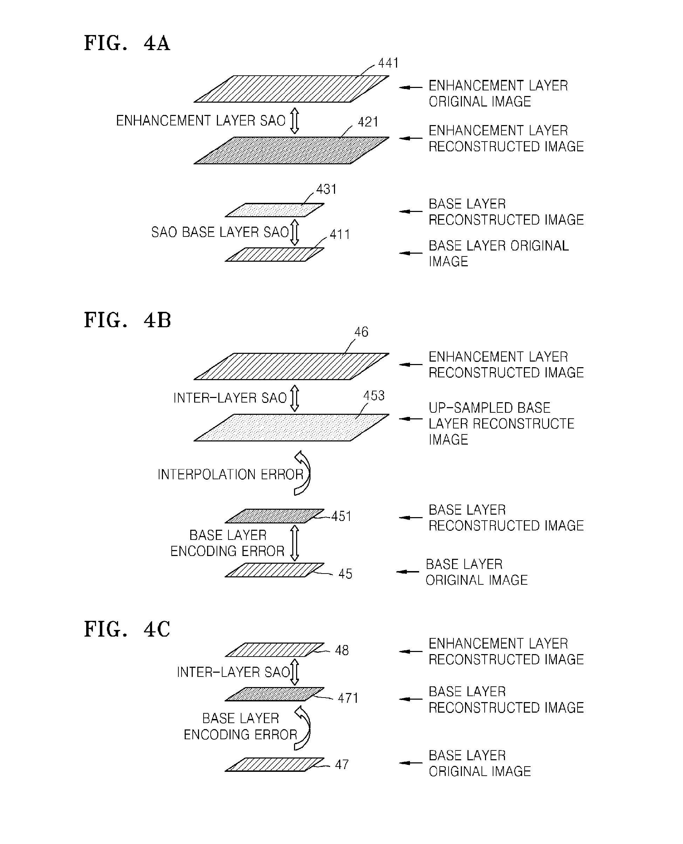

FIG. 4A through 4C are conceptual diagrams of inter-layer SAOs, according to one or more embodiments.

FIG. 4A illustrates a general SAO structure. A basic SAO parameter offset is used to encode an encoding error between a reconstructed image and an original image in a single layer encoding structure. In a base layer image prediction structure, an encoding error between a base layer reconstructed image 431 that is generated after encoding a base layer original image 411, and the base layer original image 411, may be encoded as a base layer SAO parameter. In an enhancement layer image single layer encoding structure, an encoding error between an enhancement layer reconstructed image 421 that is generated after encoding an enhancement layer original image 441, and the enhancement layer original image 441, may be encoded as an enhancement layer SAO parameter.

FIGS. 4B and 4C illustrate inter-layer SAO structures in a scalable video encoding structure. Inter-layer prediction between a base layer image and an enhancement layer image is performed, and thus the enhancement layer image may be predicted by using a base layer reconstructed image.

Referring to FIG. 4B, in a spatial scalability based inter-layer video encoding structure, a low resolution image is encoded in a base layer, and a high resolution image is encoded in an enhancement layer. A base layer image prediction structure is the same as that of FIG. 4A.

However, in an enhancement layer image inter-layer prediction structure, a base layer original image 45 may be predicted by using a base layer reconstructed image 453 generated by interpolating and up-sampling a base layer reconstructed image 451. A base layer encoding error between the base layer original image 45 and the base layer reconstructed image 451 occurs, and interpolation is performed to obtain the up-sampled base layer reconstructed image 453, which may cause an interpolation error. To compensate for an error caused by inter-layer prediction including the base layer encoding error and the interpolation error, an inter-layer prediction error between the up-sampled base layer reconstructed image 453 and an enhancement layer original image 46 may be encoded as an inter-layer SAO parameter.

Referring to FIG. 4C, in an SNR scalability based inter-layer video encoding structure, a low quality image is encoded in a base layer, and a high quality image is encoded in an enhancement layer. A base layer image prediction structure is the same as those of FIGS. 4A and 4B. However, in an enhancement layer image inter-layer prediction structure, an enhancement layer original image 48 may be predicted by using a base layer reconstructed image 471. To compensate for an error caused by inter-layer prediction including a base layer encoding error between a base layer original image 47 and the base layer reconstructed image 471, an inter-layer prediction error between the base layer reconstructed image 471 and the enhancement layer original image 48 may be encoded as an inter-layer SAO parameter.

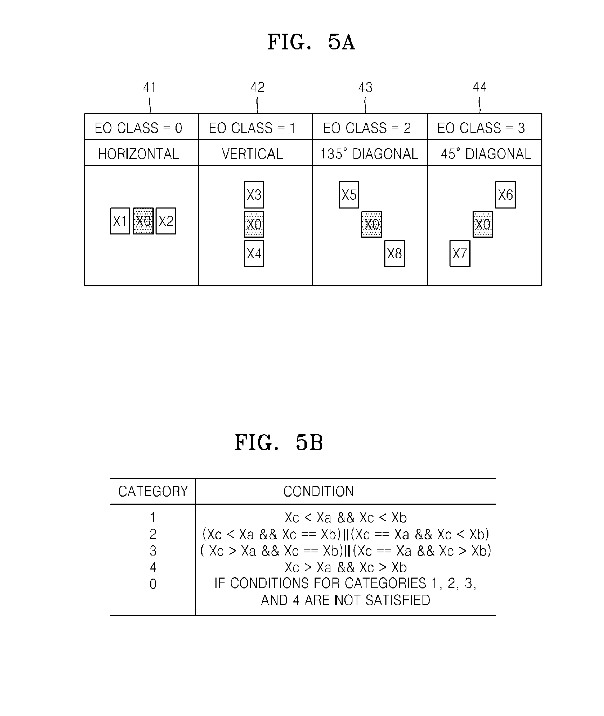

Inter-layer SAO parameters according to one or more embodiments may include categories for classifying samples according to SAO types, information regarding offset signs, and use a concept of related information such as a SAO offset of a basic SAO parameter, a category, an offset sign, etc. SAO types of SAO parameters, categories, and offset signs will be described in detail with reference to FIGS. 5A through 5D below.

According to an SAO operation, pixels may be classified (i) based on an edge type of reconstructed pixels, or (ii) a band type of reconstructed pixels. Whether pixels are classified based on an edge type or a band type may be defined by using an SAO type.

Embodiments of classifying pixels based on an edge type according to an SAO operation will now be described in detail with reference to FIGS. 5A through 5C.

When edge-type offsets of a current LCU are determined, an edge class of each of reconstructed pixels included in the current LCU may be determined. In other words, by comparing pixel values of current reconstructed pixels and adjacent pixels, an edge class of the current reconstructed pixels may be defined. An example of determining an edge class will now be described with reference to FIG. 5A.

FIG. 5A is a table showing edge classes of edge types, according to one or more embodiments.

Indices 0, 1,2, and 3 may be sequentially allocated to edge classes 41, 42, 43, and 44. If an edge type frequently occurs, a small index may be allocated to the edge type.

An edge class may indicate a direction of 1-dimensional edges formed between a current reconstructed pixel X0 and two adjacent pixels. The edge class 41 having the index 0 indicates a case when edges are formed between the current reconstructed pixel X0 and two horizontally adjacent pixels X1 and X2. The edge class 42 having the index 1 indicates a case when edges are formed between the current reconstructed pixel X0 and two vertically adjacent pixels X3 and X4. The edge class 43 having the index 2 indicates a case when edges are formed between the current reconstructed pixel X0 and two 135°-diagonally adjacent pixels X5 and X8. The edge class 44 having the index 3 indicates a case when edges are formed between the current reconstructed pixel X0 and two 45°-diagonally adjacent pixels X6 and X7.

Accordingly, by analyzing edge directions of reconstructed pixels included in a current LCU and thus determining a strong edge direction in the current LCU, an edge class of the current LCU may be determined.

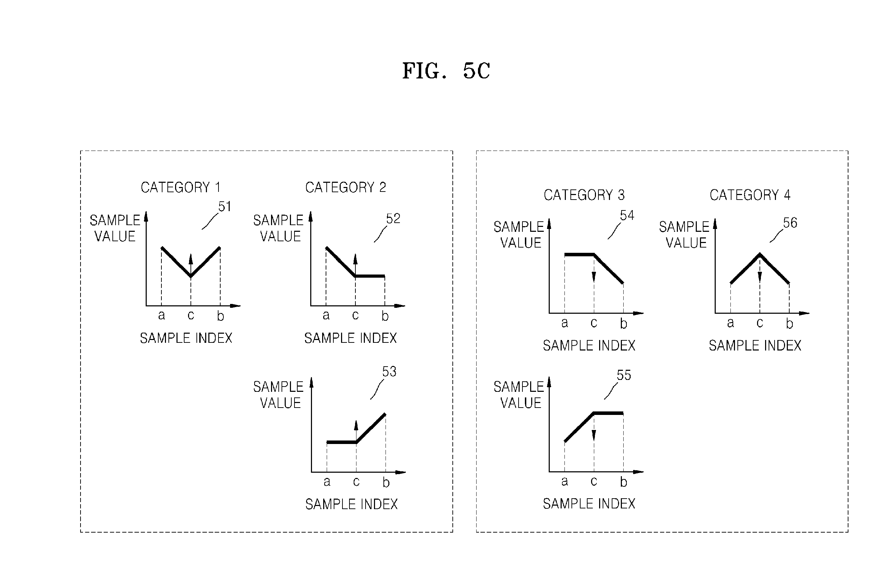

With respect to each edge class, categories may be classified according to an edge shape of a current pixel. An example of categories according to edge shapes will now be described with reference to FIGS. 5B and 5C.

FIGS. 5B and 5C are a table and a graph showing categories of edge types, according to one or more embodiments.

An edge category indicates whether a current pixel corresponds to a lowest point of a concave edge, a pixel disposed at a curved corner around a lowest point of a concave edge, a highest point of a convex edge, or a pixel disposed at a curved corner around a highest point of a convex edge.

FIG. 5B exemplarily shows conditions for determining categories of edges. FIG. 5C exemplarily shows edge shapes between a reconstructed pixel and adjacent pixels and their pixel values c, a, and b.

C indicates an index of a current reconstructed pixel, and a and b indicate indices of adjacent pixels at two sides of the current reconstructed pixel according to an edge direction. Xa, Xb, and Xc respectively indicate pixel values of reconstructed pixels having the indices a, b, and c. In FIG. 5B, an x axis indicates indices of the current reconstructed pixel and the adjacent pixels at two sides of the current reconstructed pixel, and a y axis indicates pixel values of samples.

Category 1 indicates a case when a current sample corresponds to a lowest point of a concave edge, i.e., a local valley ($Xc < Xa$ && $Xc < Xb$). As shown in graph 51, if the current reconstructed pixel c between the adjacent pixels a and b corresponds to a lowest point of a concave edge, the current reconstructed pixel may be classified as category 1.

Category 2 indicates a case when a current sample is disposed at a curved corner around a lowest point of a concave edge, i.e., a concave corner ($Xc < Xa$ && $Xc == Xb$ ‖ $Xc == Xa$ && $Xc < Xb$). As shown in graph 52, if the current reconstructed pixel c between the adjacent pixels a and b is disposed at an end point of a downward curve of a concave edge ($Xc < Xa$ && $Xc == Xb$) or, as shown in graph 53, if the current reconstructed pixel c is disposed at a start point of an upward curve of a concave edge ($Xc == Xa$ && $Xc < Xb$), the current reconstructed pixel may be classified as category 2.

Category 3 indicates a case when a current sample is disposed at a curved corner around a highest point of a convex edge, i.e., a convex corner ($Xc > Xa$ && $Xc == Xb$ ‖ $Xc == Xa$ && $Xc > Xb$). As shown in graph 54, if the current reconstructed pixel c between the adjacent pixels a and b is disposed at a start point of a downward curve of a convex edge ($Xc == Xa$ && $Xc > Xb$) or, as shown in graph 55, if the current reconstructed pixel c is disposed at an end point of an upward curve of a convex edge ($Xc > Xa$ && $Xc == Xb$), the current reconstructed pixel may be classified as category 3.

Category 4 indicates a case when a current sample corresponds to a highest point of a convex edge, i.e., a local peak ($Xc > Xa$ && $Xc > Xb$). As shown in graph 56, if the current reconstructed pixel c between the adjacent pixels a and b corresponds to a highest point of a convex edge, the current reconstructed pixel may be classified as category 4.

If the current reconstructed pixel does not satisfy any of the conditions of the categories 1, 2, 3, and 4, the current reconstructed pixel does not corresponds to an edge and thus is classified as category 0, and an offset of category 0 does not need to be encoded.

According to one or more embodiments, with respect to reconstructed pixels corresponding to the same category, an average value of difference values between the reconstructed pixels and original pixels may be determined as an offset of a current category. Also, offsets of all categories may be determined.

The concave edges of categories 1 and 2 may be smoothed if reconstructed pixel values are adjusted by using positive offset values, and may be sharpened using negative offset values. The convex edges of categories 3 and 4 may be smoothed using negative offset values and may be sharpened using positive offset values.

Inter-layer SAO compensation according to an embodiment may not allow the sharpening effect of edges. In this case, the concave edges of categories 1 and 2 need positive offset values, and the convex edges of categories 3 and 4 need negative offset values. That is, a sign of an offset value may be invariably determined based on the categories of edges. Accordingly, the scalable video encoding apparatus 10 and the scalable video decoding apparatus 20 may not transmit and receive the sign of the offset value of an edge type and may transmit and receive only an absolute value of the offset value.

Accordingly, the scalable video encoding apparatus 10 may encode and transmit offset values according to categories of a current edge class, and the scalable video decoding apparatus 20 may adjust reconstructed pixels of the categories by using the received offset values.

For example, if an offset value of an edge type is determined as 0, the scalable video encoding apparatus 10 may transmit only a SAO type and edge class information.

For example, if an absolute offset value of an edge type is not 0, the scalable video encoding apparatus 10 may transmit the SAO type, the absolute offset value, and edge class information. With respect to the edge type, a sign of the offset value does not need to be transmitted.

If the received absolute offset value is not 0, the scalable video decoding apparatus 20 may read the absolute offset value of the edge type. The sign of the offset value may be predicted according to an edge category based on an edge shape between a reconstructed pixel and adjacent pixels.

Accordingly, the scalable video encoding apparatus 10 according to an embodiment may classify pixels according to edge directions and edge shapes, may determine an average error value between pixels having the same characteristics as an offset value, and may determine offset values according to categories. The scalable video encoding apparatus 10 may encode and transmit SAO type information indicating an edge type, SAO class information indicating an edge direction, and the offset values.

The scalable video decoding apparatus 20 may receive the SAO type information, the SAO class information, and the offset values, and may determine an edge direction according to the SAO type information and the SAO class information. The scalable video decoding apparatus 20 may determine an offset value of samples of enhancement layer prediction images of a category corresponding to an edge shape according to the edge direction, and may adjust sample values by the offset value, thereby generating an enhancement layer reconstructed image with a minimum error between an original image and a reconstructed image.

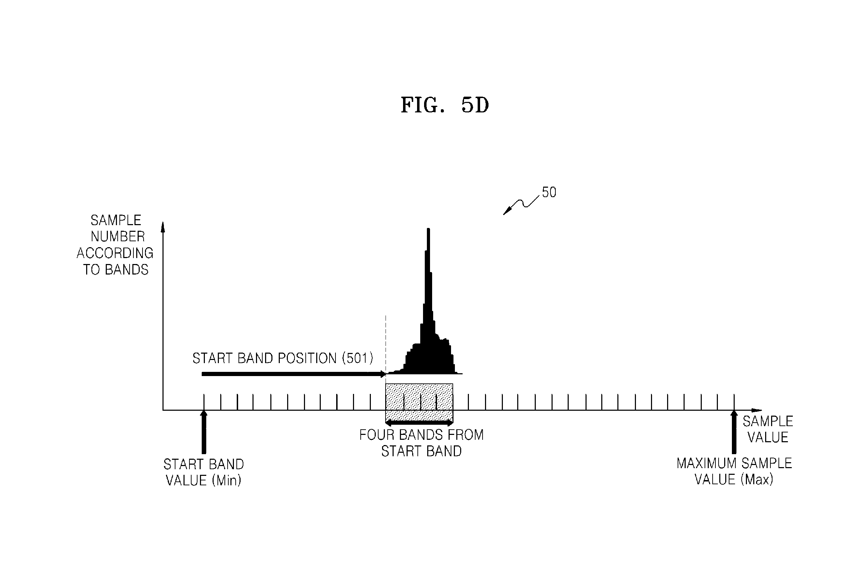

Embodiments of classifying samples based on a band type according to an SAO technique will now be described in detail with reference to FIG. 5D.

FIG. 5D is a graph 50 of SAO categories of SAO band types.

The graph 50 shows a sample number according to sample value bands with respect to reconstructed samples.

According to an embodiment, each of sample values of reconstructed samples may belong to one of a plurality of bands. For example, the sample values may have a total range from a minimum value Min to a maximum value Max, that is Min, ..., (Min+2^(p-1)(=Max) according to p-bit sampling. If the total range (Min, Max) of the sample values is divided into K periods, each period of the sample values is referred to as a band. If $B_k$ indicates a maximum value of a kth band, bands $[B_0, B_1-1]$, $[B_1, B_2-1]$, $[B_2, B_3-1]$, ..., and $[B_k-1, B_k]$ may be divided. If a sample value of a current reconstructed sample belongs to the band $[B_k-1, B_k]$, it may be determined that a current sample belongs to the band k. The bands may be uniformly or ununiformly divided.

For example, if sample values are classified into equal 8-bit sample bands, the sample values may be divided into 32 bands. In more detail, they may be classified into bands [0, 7], [8, 15], ..., [240, 247], and [248, 255].

From among a plurality of bands classified according to a band type, a band to which each of sample values of reconstructed samples belongs may be determined. Also, an offset value indicating an average of errors between original samples and reconstructed samples in each band may be determined.

Accordingly, the scalable video encoding apparatus 10 and the scalable video decoding apparatus 20 may encode and transmit and ran offset corresponding to each of bands classified according to a current band type, and may receive the offset and adjust reconstructed samples by the offset.

Accordingly, with respect to a band type, the scalable video encoding apparatus 10 and the scalable video decoding apparatus 20 according to an embodiment may classify samples of enhancement layer prediction images according to bands to which their sample values belong, may determine an offset as an average of error values of reconstructed pixels that belong to the same band, and may adjust the samples by the offset, thereby generating an enhancement layer reconstructed image with a minimum error between an original image and a reconstructed image.

When an offset according to a band type is determined, the scalable video encoding apparatus 10 and the scalable video decoding apparatus 20 may classify reconstructed pixels into categories according to a band position. For example, if the total range of the pixel values is divided into K bands, categories may be indexed according to a band index k indicating a kth band. The number of categories may be determined to correspond to the number of bands.

However, in order to reduce data, the scalable video encoding apparatus 10 and the scalable video decoding apparatus 20 may restrict the number of categories used to determine offsets according to an SAO scheme. For example, a predetermined number of bands that are continuous from a band having a predetermined start position in a direction in which a band index is increased may be allocated to categories, and only an offset of each category may be determined.

For example, if a start point of a band having an index of 12 is determined as a start band position 501, four bands from a start band, i.e., bands having indices of 12, 13, 14, and 15, may be respectively allocated to categories 1, 2, 3, and 4. Accordingly, an average error between reconstructed samples and original samples included in a band having the index of 12 may be determined as an offset of category 1. Likewise, an average error between reconstructed samples and original samples included in a band having the index of 13 may be determined as an offset of category 2, an average error between reconstructed samples and original samples included in a band having the index of 14 may be determined as an offset of category 3, and an average error between reconstructed samples and original samples included in a band having the index of 15 may be determined as an offset of category 4.

In this case, information about the start band position 501 of a band range, i.e., the position of a left band, is required to determine positions of bands allocated to categories. Accordingly, the scalable video encoding apparatus 10 according to an embodiment may encode and transmit left start point information indicating the position of the left band, as the SAO class. The scalable video encoding apparatus 10 may encode and transmit an SAO type indicating a band type, an SAO class, and offset values according to categories.

The scalable video decoding apparatus 20 according to an embodiment may receive the SAO type, the SAO class, and the offset values according to the categories. If the received SAO type is a band type, the scalable video decoding apparatus 20 may read a start band position from the SAO class. The scalable video decoding apparatus 20 may determine a band to which samples of enhancement layer prediction images belong, from among the four bands from the start band, may determine an offset value allocated to a current band from among the offset values according to the categories, and may adjust sample values by the offset value.

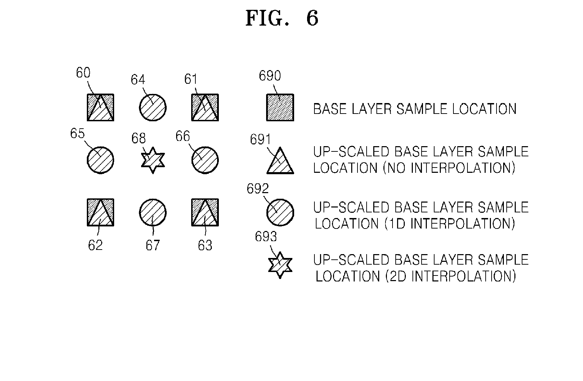

FIG. 6 is a diagram of SAO categories with respect to resolution ratios between layers, according to one or more embodiments.

In a spatial scalability based inter-layer prediction structure, interpolation filtering may be performed on base layer reconstructed images to convert resolutions of base layer reconstructed images into resolutions of enhancement layer images. In an inter-layer prediction structure according to an embodiment, interpolation filtering for obtaining sample values of sub-pixels of base layer reconstructed images is performed to increase resolutions.

Referring to FIG. 6, if a resolution ratio between base layer images and enhancement layer images is 2, interpolation filtering may be performed to up-scale base layer reconstructed samples 60, 61, 62, and 63. Enhancement layer samples 60, 62, 62, 63, 64, 65, 66, 67, and 68 may be determined in base layer sample locations that are up-scaled through interpolation filtering.

However, samples of a base layer sample location 691 that are up-scaled to overlap with a base layer sample location 690 may be obtained without interpolation filtering.

Samples 64, 65, 66, and 67 of the base layer sample location 690 and an enhancement layer sample location 692 located in a one dimensional (1-D) direction may be obtained through 1-D filtering in a horizontal direction or in a perpendicular direction with respect to the base layer reconstructed samples 60, 61, 62, and 63.

A sample 68 of the base layer sample location 690 and an enhancement layer sample location 693 located in a two dimensional (2-D) direction may be obtained by continuously performing 1-D filtering in the horizontal direction and 1-D filtering in the perpendicular direction with respect to the base layer reconstructed samples 60, 61, 62, and 63.

Interpolation filtering of coding units may generate an encoding error such as a ringing artifact according to phase shifts of interpolation filters. Interpolation filters may differ according to locations of sub-pixels, and phase shifts of interpolation filters may be determined according to locations of sub-pixels. For example, phase shifts of interpolation filters for interpolating 1/2, 1/3, 2/3, 1/4, 3/4, ..., 1/16 pixels may differ from each other. Phase shifts of interpolation filters for inter-layer prediction according to resolution ratios between layers may be determined, and thus different interpolation filters may be selected according to resolution ratios and phase shifts.

To take interpolation errors caused during inter-layer prediction into consideration, inter-layer prediction errors may be classified according to resolution ratios between layers and phase shifts of interpolation filters. Thus, inter-layer SAO categories may be determined based on edge shapes or sample value bands as well as resolution ratios and phase shifts of interpolation filters.

Edge types and band types are introduced as SAO types, and SAO classes and categories according to SAO types are described above. A region used to determine SAO parameters that are transmitted and received by the scalable video encoding apparatus 10 and the scalable video decoding apparatus 20 will now be described in detail below.

SAO parameters according to one or more embodiments may be determined and signaled with respect to a predetermined data unit among a video sequence, a picture, a slice, a tile, a LCU, and coding units having a tree structure.

In an inter-layer prediction structure according to an embodiment, SAO parameters may be determined for each predetermined data unit of enhancement layer images.

In an inter-layer prediction structure according to another embodiment, inter-layer prediction may not be performed in every data unit of enhancement layer images. Thus, if inter-layer prediction is not performed in a predetermined data unit, an inter-layer prediction error may not occur. Therefore, SAO parameters according to inter-layer prediction may be determined only for an enhancement layer data unit on which inter-layer prediction is performed.

Inter-layer SAO parameters determined for each LCU according to an embodiment are described below.

Inter-layer SAO on/off information according to an embodiment may be determined for each color component. For example, with respect to an YCrCb color image, inter-layer SAO compensation may be performed on each of a luma component (Y component) and first and second chroma components (Cr and Cb components). The inter-layer SAO on/off information indicating whether to perform inter-layer SAO compensation may be determined on each of the luma component and the first and second chroma components.

Luma inter-layer SAO on/off information indicating whether to perform inter-layer SAO compensation on the luma component of a current slice may be determined. If inter-layer SAO compensation is performed on the luma component, chroma inter-layer SAO on/off information indicating whether to perform inter-layer SAO compensation on the first and second chroma components of the current slice may be further determined. If inter-layer SAO compensation is performed on the first chroma color component, inter-layer SAO compensation may also be performed on the second chroma component. If inter-layer SAO compensation is not performed on the first chroma color component, inter-layer SAO compensation may not be performed on the second chroma component.

Inter-layer SAO on/off information according to an embodiment may be determined in data units used to determine different SAO parameters and different types of data units. For example ,the inter-layer SAO on/off information may be determined for each slice, whereas remaining SAO parameters may be determined for each LCU. That is, if inter-layer SAO compensation is performed on the current slice according to the inter-layer SAO on/off information, remaining SAO parameters may be determined for each LCU included in the current slice. Meanwhile, if inter-layer SAO on/off information indicating that inter-layer SAO compensation is not performed on the current slice is determined, remaining parameters may not be determined for each LCU included in the current slice.

As described above, a sample classification method of determining SAO types and categories is previously determined. For example, each sample may be classified into an edge offset EO_0 in a perpendicular direction, an edge offset EO_1 in a horizontal direction, an edge offset EO_2 in a direction of 45 °, an edge offset EO_3 in a direction of 135 °, and a band offset BO.

An inter-layer SAO classification method according to an embodiment may determine offsets only according to a single sample classification method with respect to a current region. Determined information regarding SAO types and offsets may be encoded and transmitted as SAO parameters.

An inter-layer SAO classification method according to another embodiment may determine offsets according to every sample classification method with respect to the current region. In this case, since it is unnecessary to inform who? what? about a specific SAO type, information regarding SAO types may be excluded from SAO parameters, and thus the information regarding SAO types may not be encoded and transmitted. For example, samples that are classified to belong to an edge in the perpendicular direction may be compensated by using the edge offset EO_0. Samples that are classified to belong to an edge in the horizontal direction may be compensated by using the edge offset EO_1. Samples that are classified to belong to an edge in the direction of 45 ° may be compensated by using the edge offset EO_2. Samples that are classified to belong to an edge in the direction of 135 ° may be compensated by using the edge offset EO_3. Samples according to band types may be compensated by using a corresponding sample value band offset. Thus, offsets according to categories for every SAO type may be consequently applied to samples of the current region.

Among categories according to inter-layer SAO types, the number of categories having offsets other than 0 may be previously determined. For example, four categories may be allowed for each SAO type.

In inter-layer SAO offsets according to one or more embodiments, offsets that are determined at a peak point of an edge type for each picture may have values other than 0. For example, offsets in a concave edge corner and a block edge corner may be determined as 0. To reduce unnecessary overhead, offsets of categories corresponding to edge corners may be regarded as 0, and information regarding offsets according to corresponding categories may not be transmitted or parsed. That is, only offset values according to categories corresponding to edge peaks may be transmitted.

A maximum absolute value for inter-layer SAO offsets according to one or more embodiments may be limited. The maximum absolute value may be determined based on at least one of SAO types, categories, and resolution ratios between layers.

When an offset absolute value is 0, sign information or remaining offset values may not be necessarily encoded. However, when the offset absolute value is not 0, sign information of SAO parameters and other offset absolute values may be further transmitted.

In inter-layer SAO offsets according to one or more embodiments, signs of offsets may determine an effect of SAO compensation. That is, a negative offset value may lead to an edge smoothing effect, and a positive offset value may lead to an edge sharpening effect.

When inter-layer SAO types are predetermined types or have predetermined resolution ratios, offset signs may be previously fixed. For example, in the edge type, offsets only for edge smoothing may be allowed, and sign information may not be transmitted. For example, when a resolution ratio is 2, offsets only for edge smoothing may be allowed, whereas, when the resolution ratio is 1.5, offsets only for edge sharpening may be allowed. Offset signs are fixed, and thus information regarding offset signs may be excluded from SAO parameters.

As another example, when both edge smoothing and edge sharpening are allowed, the information regarding offset signs may be included in SAO parameters.

When an inter-layer SAO type is a band type, band offsets may be determined with respect to a limited number of categories, i.e., a limited number of continuous sample value bands. Thus, information regarding a start band position may be included in SAO parameters among continuous sample value bands.

Inter-layer SAO offsets may be determined for a plurality of sets of continuous sample value bands. For example, encoding errors may be focused on both end bands among whole bands of a total sample value range. In this case, offsets may be determined with respect to the same number of continuous bands at both ends among whole bands. Information regarding a start band may be independently encoded with respect to continuous bands at both ends. Alternatively, since the same number of bands are at both ends, although information regarding a start band of bands at one end is encoded, positions of remaining bands may be analogically determined.

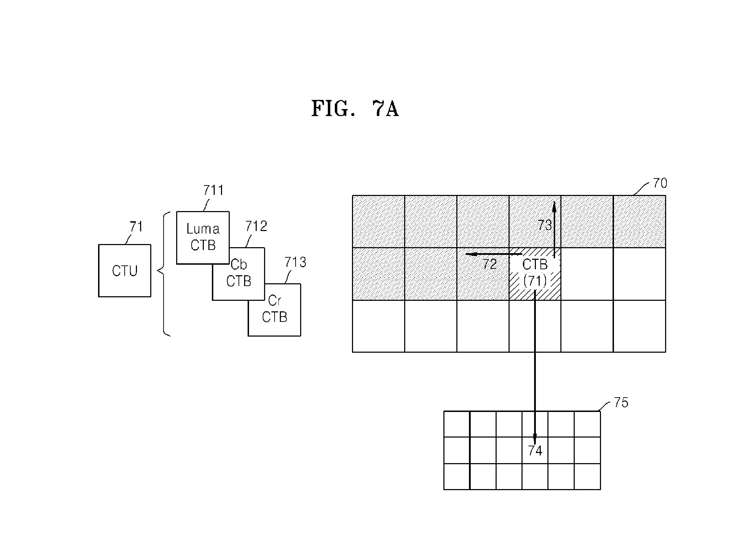

FIG. 7A is a diagram of data units referred to so as to merge SAO parameters with a current LCU, according to one or more embodiments.

A current block CTB (LCU) 71 may include a luma CTB 711, a Cb chroma block 712, and a Cr chroma block 713. Inter-layer SAO compensation may be performed on the luma CTB 711, the Cb chroma block 712, and the Cr chroma block 713 as described above. An inter-layer SAO offset value may be determined for each of the luma CTB 711, the Cb chroma block 712, and the Cr chroma block 713 of the current block CTB 71.

Adjacent blocks among blocks in an enhancement layer image 70 are configured as a same image, and thus there is a high possibility that SAO types of each block and/or offset values may be the same between the adjacent blocks. When the scalable video encoding apparatus 10 according to an embodiment compares SAO parameters of the current block CTB 71 with SAO parameters of the adjacent blocks and determines that the SAO parameters are the same, the scalable video encoding apparatus 10 may merge and encode the SAO parameters of the current block CTB 71 and the adjacent blocks. If the SAO parameters of the adjacent blocks are encoded earlier, the SAO parameters of the adjacent blocks may be selected as the SAO parameters of the current block CTB 71. Thus, the scalable video encoding apparatus 10 may not encode the SAO parameters of the current block CTB 71 but encode SAO merge information regarding the current block CTB 71.

The scalable video decoding apparatus 20 according to an embodiment may parse the SAO merge information before parsing SAO parameters from received bitstreams, and may determine whether to parse the SAO parameters. The scalable video decoding apparatus 20 may determine whether the adjacent blocks include a block having the same SAO parameters as those of the current block CTB 71 based on the SAO merge information regarding the current block CTB 71.

For example, when the scalable video decoding apparatus 20 determines that the adjacent blocks include the block having the same SAO parameters as those of the current block CTB 71 based on the SAO merge information, the scalable video decoding apparatus 20 may not parse the SAO parameters of the current block CTB 71 but may select reconstructed SAO parameters of the adjacent blocks as the SAO parameters of the current block CTB 71. Thus, the scalable video decoding apparatus 20 may reconstruct the SAO parameters of the current block CTB 71 to be the same as those of the adjacent blocks. The scalable video decoding apparatus 20 may determine a block of which SAO parameters are to be referred to from among the adjacent blocks based on the SAO merge information.

However, when the SAO parameters of the adjacent blocks are different from the SAO parameters of the current block CTB 71 based on the SAO merge information, the scalable video decoding apparatus 20 may parse and reconstruct the SAO parameters of the current block CTB 71 from bitstreams.

For example, among LCUs of the enhancement layer image 70 of the same layer as that of the current block CTB 71, a left block 72 adjacent to the current block CTB 71, an upper block 73 adjacent thereto, and a collocated block 74 corresponding to a position of the current block CTB 71 among a base layer reconstructed image 75 may be included in a merge candidate list.

Therefore, the scalable video encoding apparatus 10 according to an embodiment may compare the SAO parameters of the adjacent blocks included in the merge candidate list to those of the current block CTB 71 according to a reference order of the blocks included in the merge candidate list. For example, the SAO parameters may be compared to those of the current block CTB 71 in the order of the left block 72, the upper block 73, and the collocated block 74. From among the compared left, upper, and collocated blocks 72, 73, and 74, a block having the same SAO parameters as those of the current block CTB 71 may be determined as a reference block.

In order to predict the SAO parameters of the current block CTB 71, the scalable video encoding apparatus 10 and the scalable video decoding apparatus 20 may refer to SAO parameters of the reference block. SAO merge information indicating a block having SAO parameters to be referred to may also be signalled. The scalable video decoding apparatus 20 according to an embodiment may select one block from the merge candidate list based on the SAO merge information, and may determine remaining SAO parameters of the current block CTB 71 to be the same as those of the selected block.

For example, leftward SAO merge information indicating whether the SAO parameters of the current block CTB 71 are the same as those of the left block 72, upward SAO merge information indicating whether the SAO parameters of the current block CTB 71 are the same as those of the upper block 73, and base layer SAO merge information indicating whether the SAO parameters of the current block CTB 71 are the same as those of the collocated block 74 may be encoded as the SAO merge information.

If the SAO parameters of at least one of the left block 72, the upper block 73, and the collocated block 74 are the same as those of the current block CTB 71, the scalable video encoding apparatus 10 may encode only the leftward SAO merge information, the upward SAO merge information, or the base layer SAO merge information, and may not encode the SAO parameters of the current block CTB 71.

If the SAO parameters of all of the left block 72, the upper block 73, and the collocated block 74 are different from those of the current block CTB 71, the scalable video encoding apparatus 10 may encode the leftward SAO merge information, the upward SAO merge information, the base layer SAO merge information, and the SAO parameters of the current block CTB 71.

If the scalable video decoding apparatus 20 selects the SAO parameters of the left block 72, the upper block 73, and the collocated block 74 as the SAO parameters of the current block CTB 71 based on at least one of the leftward SAO merge information, the upward SAO merge information, and the base layer SAO merge information among SAO parameters for inter-layer prediction SAOs, the scalable video decoding apparatus 20 may not directly obtain the SAO parameters of the current block CTB 71 from an enhancement layer stream.

If there is no block of which SAO parameters are to be referred to based on the leftward SAO merge information, the upward SAO merge information, and the base layer SAO merge information, the scalable video decoding apparatus 20 may not directly obtain the SAO parameters of the current block CTB 71 from the enhancement layer stream.

Only some SAO parameters of a base layer collocated block may be used based on the base layer SAO merge information. For example, although edge distributions between an enhancement layer block and the base layer collocated block are similar, a base layer SAO offset value for compensating for a base layer prediction error and an inter-layer SAO offset value for compensating for an inter-layer prediction error may be different.

Therefore, although the base layer SAO merge information of the current block CTB 71 is allowed to determine the SAO parameters of the current block CTB 71 by using the SAO parameters of the collocated block 74, a SAO type may be selected as a SAO type of the current block CTB 71 from among the SAO parameters of the collocated block 74. An offset value of the current block CTB 71 of an enhancement layer may be directly signaled as an inter-layer SAO parameter.

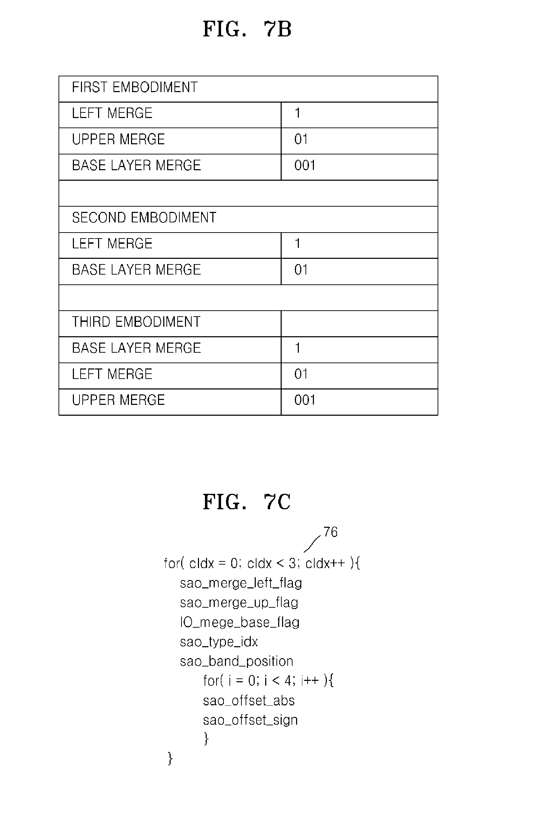

FIG. 7B is a table showing codewords of SAO merge information, according to one or more embodiments.

The SAO merge information according to a first embodiment may be encoded as 3 bits. According to the first embodiment, the leftward SAO merge information indicating whether to use the SAO parameters of the left block 72, the upward SAO merge information indicating whether to use the SAO parameters of the upper block 7, and the base layer SAO merge information indicating whether to use the SAO parameters of the collocated block 74 may be sequentially determined. Thus, if it is determined that the SAO parameters of the left block 72 or the upper block 73 are first used, the base layer SAO merge information used to refer to the SAO parameters of the collocated block 74 may not be signaled.

The SAO merge information according to a second embodiment may be encoded as 2 bits. According to the second embodiment, the leftward SAO merge information and the base layer SAO merge information may be sequentially determined. Thus, if it is determined that the SAO parameters of the left block 72 are first used, the base layer SAO merge information used to refer to the SAO parameters of the collocated block 74 may not be signaled.

Although the SAO merge information according to a third embodiment may be encoded as 3 bits, a sequence in determination targets in the third embodiment is different from that in the first embodiment. According to the third embodiment, the base layer SAO merge information indicating whether to use the SAO parameters of the collocated block 74, the leftward SAO merge information and the upward SAO merge information may be sequentially determined. Thus, it may be first determined whether to refer to the SAO parameters of the collocated block 74 prior to the left block 72 or the upper block 73.

The collocated block 74 corresponding to the current block CTB 71 of the enhancement layer image 70 may be determined as a block CTB of a location on the base layer image 75 on which a location of a left upper corner of a current block 74 is projected. As another example, when pixels of the base layer image 75 are projected on the enhancement layer image 70, a base layer block CTB to which a plurality of base layer pixels projected on the current block CTB 71 belong may be determined as the collocated block 74.

The SAO parameters between the luma CTB 711, the Cb chroma block 712, and the Cr chroma block 713 of the current block CTB 71 may be predicted by using each other.

For example, common SAO merge information may be applied to the luma CTB 711, the Cb chroma block 712, and the Cr chroma block 713 of the current block CTB 71. That is, based on one piece of SAO merge information, the SAO parameters of the luma CTB 711 may be compared with the SAO parameters of luma blocks of the merge candidate list to determine that the SAO parameters therebetween are the same, the SAO parameters of the Cb chroma block 712 may be compared with the SAO parameters of Cb chroma blocks of the merge candidate list to determine that the SAO parameters therebetween are the same, and the SAO parameters of the Cr chroma block 713 may be compared with the SAO parameters of Cr chroma blocks of the merge candidate list to determine that the SAO parameters therebetween are the same.

For example, common SAO type information may be applied to the Cb chroma block 712 and the Cr chroma block 713. That is, based on one piece of SAO type information, it may be determined whether or not to simultaneously perform inter-layer SAO compensation on both the Cb chroma block 712 and the Cr chroma block 713. Based on one piece of SAO type information, it may be determined whether SAO types of the Cb chroma block 712 and the Cr chroma block 713 are edge type or band types. That is, based on one piece of SAO type information, offset values may be determined according to whether the Cb chroma block 712 and the Cr chroma block 713 are an edge type or a band type.

Based on one piece of SAO type information, the Cb chroma block 712 and the Cr chroma block 713 may share the same SAO class. If a SAO type is an edge type based on one piece of SAO type information, the Cb chroma block 712 and the Cr chroma block 713 may share the same edge direction. If a SAO type is a band type based on one piece of SAO type information, the Cb chroma block 712 and the Cr chroma block 713 may share the same start band position.

FIG. 7C shows SAO syntax of a coding unit, according to one or more embodiments.

Since an SAO operation is performed on each color component of an LCU, SAO parameters 76 of FIG. 7C may be individually obtained with respect to each color component. If a color index 'cldx' indicating a luma component, or a first or second chroma component varies, the additional SAO parameters 76 may be obtained.

The SAO parameters 76 may include a parameter 'sao_merge_left_flag' indicating leftward SAO merge information, a parameter 'sao_merge_up_flag' indicating upward SAO merge information, a parameter 'sao_type_idx' indicating SAO type information, a parameter 'sao_band_position' indicating band position information of a band type, a parameter 'sao_offset_abs' indicating absolute offset value information, and a parameter 'sao_offset_sign' indicating offset sign information. Accordingly, whenever the color index 'cldx' is set as 0, 1, or 2, 'sao_merge_left_flag', 'sao_merge_up_flag', 'sao_type_idx', 'sao_band_position', 'sao_offset_abs', and 'sao_offset_sign' may be newly obtained.

In particular, the parameter 'sao_offset_abs' indicating the absolute offset value information, and a parameter 'sao_offset_sign' indicating the offset sign information may be additionally obtained with respect to four SAO categories. Accordingly, 'sao_offset_abs' and 'sao_offset_sign' may be obtained with respect to each of four categories and each color component.

The scalable video encoding apparatus 10 and the scalable video decoding apparatus 20 that use SAO compensation according to an embodiment may classify prediction errors caused by inter-layer prediction based on image characteristics such as edge types or band types of LCUs and may transmit and receive inter-layer SAO parameters including an offset value that is an average prediction error of samples classified as the same characteristics. Thus, samples are compensated for inter-layer prediction errors obtained by using SAO parameters according to categories of samples of an enhancement layer prediction image determined from a base layer reconstructed sample, thereby generating an enhancement layer reconstructed image.

The scalable video encoding apparatus 10 and the scalable video decoding apparatus 20 according to an embodiment may split blocks split from video data into coding units having a tree structure, and may use coding units for inter-layer prediction or inter-layer prediction with respect to coding units, prediction units, and transformation unit as described above. Hereinafter, a video encoding method, a video encoding apparatus, a video decoding method, and a video decoding apparatus based on coding units having the tree structure and transformation units will be described with reference to FIGS. 8 through 20 below.

During multilayer video encoding/decoding processes, encoding/decoding processes for base layer images and encoding/decoding processes for enhancement layer images are separately performed. That is, when inter-layer prediction occurs in multilayer video, although single layer video encoding/decoding results may be mutually referred to, separate encoding/decoding processes are performed for each of single layer videos.

Therefore, for convenience of description, a video encoding process and a video decoding process based on coding units having the tree structure that will be described later with reference to FIGS. 8 through 20 are a video encoding process and a video decoding process on single layer video, and thus inter prediction and motion compensation are described in detail. However, as described with reference to FIGS. 1A through 7B above, inter-layer prediction and compensation between base layer images and enhancement layer images are performed so as to perform video stream encoding/decoding.

Therefore, in order for the base layer encoder 12 of the scalable video encoding apparatus 10 to encode multilayer video based on coding units having the tree structure, according to an embodiment, the number of video encoding apparatuses 100 of FIG. 8 included in the base layer encoder 12 may be as much as the number of multilayer videos used to perform video encoding on each single layer video and the base layer encoder 12 may be controlled to encode single layer video allocated to each of the video encoding apparatuses 100. The video encoding apparatuses 100 may perform prediction between views by using encoding results of a separated single view of each of the video encoding apparatuses 100. Accordingly, the base layer encoder 12 of the scalable video encoding apparatus 10 may generate a base layer video stream and an enhancement layer video stream on which an encoding result for each layer is recorded.

Similarly, in order for the enhancement layer decoder 26 of the scalable video decoding apparatus 20 to decode multilayer video based on coding units having the tree structure, according to an embodiment, the number of video decoding apparatuses 200 of FIG. 8 included in the enhancement layer decoder 26 may be as much as the number of multilayer videos used to perform video decoding on each layer of the received base layer video stream and enhancement layer video stream and the enhancement layer decoder 26 may be controlled to decode single layer video allocated to each of the video decoding apparatuses 200. The video decoding apparatuses 200 may perform inter-layer compensation by using decoding results of a separated single view of each of the video decoding apparatuses 200. Accordingly, the enhancement layer decoder 26 of the scalable video decoding apparatus 20 may generate base layer reconstructed images and enhancement layer reconstructed images for each layer.

FIG. 8 is a block diagram of a video encoding apparatus 100 based on coding units having a tree structure, according to one or more embodiments.

The video encoding apparatus 100 involving video prediction based on coding units having a tree structure includes a coding unit determiner 120 and an outputter 130.

The coding unit determiner 120 may split a current picture based on a LCU that is a coding unit having a maximum size for a current picture of an image. If the current picture is larger than the LCU, image data of the current picture may be split into the at least one LCU. The LCU according to one or more embodiments may be a data unit having a size of 32×32, 64×64, 128×128, 256×256, etc., wherein a shape of the data unit is a square having a width and length in squares of 2.

A coding unit according to one or more embodiments may be characterized by a maximum size and a depth. The depth denotes the number of times the coding unit is spatially split from the LCU, and as the depth deepens, deeper coding units according to depths may be split from the LCU to a smallest coding unit (SCU). A depth of the LCU is an uppermost depth and a depth of the SCU is a lowermost depth. Since a size of a coding unit corresponding to each depth decreases as the depth of the LCU deepens, a coding unit corresponding to an upper depth may include a plurality of coding units corresponding to lower depths.

As described above, the image data of the current picture is split into the LCUs according to a maximum size of the coding unit, and each of the LCUs may include deeper coding units that are split according to depths. Since the LCU according to one or more embodiments is split according to depths, the image data of the space domain included in the LCU may be hierarchically classified according to depths.

A maximum depth and a maximum size of a coding unit, which limit the total number of times a height and a width of the LCU are hierarchically split, may be predetermined.

The coding unit determiner 120 encodes at least one split region obtained by splitting a region of the LCU according to depths, and determines a depth to output a finally encoded image data according to the at least one split region. In other words, the coding unit determiner 120 determines a coded depth by encoding the image data in the deeper coding units according to depths, according to the LCU of the current picture, and selecting a depth having the least encoding error. The determined coded depth and the encoded image data according to the determined coded depth are output to the outputter 130.

The image data in the LCU is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each LCU.

The size of the LCU is split as a coding unit is hierarchically split according to depths, and as the number of coding units increases. Also, even if coding units correspond to the same depth in one LCU, it is determined whether to split each of the coding units corresponding to the same depth to a lower depth by measuring an encoding error of the image data of the each coding unit, separately. Accordingly, even when image data is included in one LCU, the encoding errors may differ according to regions in the one LCU, and thus the coded depths may differ according to regions in the image data. Thus, one or more coded depths may be determined in one LCU, and the image data of the LCU may be divided according to coding units of at least one coded depth.

Accordingly, the coding unit determiner 120 may determine coding units having a tree structure included in the LCU. The 'coding units having a tree structure' according to one or more embodiments include coding units corresponding to a depth determined to be the coded depth, from among all deeper coding units included in the LCU. A coding unit of a coded depth may be hierarchically determined according to depths in the same region of the LCU, and may be independently determined in different regions. Similarly, a coded depth in a current region may be independently determined from a coded depth in another region.

A maximum depth according to one or more embodiments is an index related to the number of splitting times from a LCU to an SCU. A first maximum depth according to one or more embodiments may denote the total number of splitting times from the LCU to the SCU. A second maximum depth according to one or more embodiments may denote the total number of depth levels from the LCU to the SCU. For example, when a depth of the LCU is 0, a depth of a coding unit, in which the LCU is split once, may be set to 1, and a depth of a coding unit, in which the LCU is split twice, may be set to 2. Here, if the SCU is a coding unit in which the LCU is split four times, 5 depth levels of depths 0, 1, 2, 3, and 4 exist, and thus the first maximum depth may be set to 4, and the second maximum depth may be set to 5.

Prediction encoding and transformation may be performed according to the LCU. The prediction encoding and the transformation are also performed based on the deeper coding units according to a depth equal to or depths less than the maximum depth, according to the LCU.

Since the number of deeper coding units increases whenever the LCU is split according to depths, encoding, including the prediction encoding and the transformation, is performed on all of the deeper coding units generated as the depth deepens. For convenience of description, the prediction encoding and the transformation will now be described based on a coding unit of a current depth, in a LCU.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the LCU, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. A partition is a data unit where a prediction unit of a coding unit is split, and a prediction unit may be a partition having the same size as a coding unit.

For example, when a coding unit of 2N×2N (where N is a positive integer) is no longer split and becomes a prediction unit of 2N×2N, and a size of a partition may be 2N×2N, 2N×N, N×2N, or N×N. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2N×2N, 2N×N, N×2N, or N×N. Also, the skip mode may be performed only on the partition of 2N×2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residues in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2N×2N, a transformation depth may be 0 when the size of a transformation unit is 2N×2N, may be 1 when the size of the transformation unit is N×N, and may be 2 when the size of the transformation unit is N/2×N/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

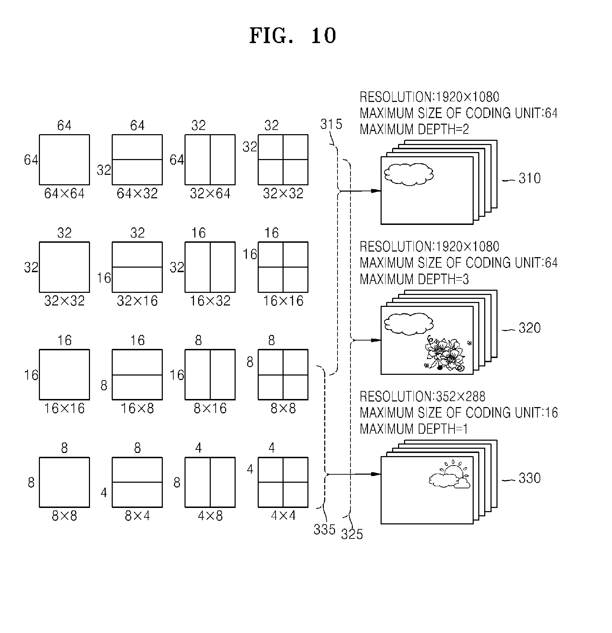

Coding units having a tree structure in a LCU and methods of determining a prediction unit/partition, and a transformation unit, according to one or more embodiments, will be described in detail below with reference to FIGS. 10 through 20.

The coding unit determiner 120 may measure an encoding error of deeper coding units according to depths by using Rate-Distortion Optimization based on Lagrangian multipliers.

The outputter 130 outputs the image data of the LCU, which is encoded based on the at least one coded depth determined by the coding unit determiner 120, and information about the encoding mode according to the coded depth, in bitstreams.

The encoded image data may be obtained by encoding residues of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one LCU, and information about at least one encoding mode is determined for a coding unit of a coded depth, information about at least one encoding mode may be determined for one LCU. Also, a coded depth of the image data of the LCU may be different according to locations since the image data is hierarchically split according to depths, and thus information about the coded depth and the encoding mode may be set for the image data.

Accordingly, the outputter 130 may assign encoding information about a corresponding coded depth and an encoding mode to at least one of the coding unit, the prediction unit, and a minimum unit included in the LCU.

The minimum unit according to one or more embodiments is a square data unit obtained by splitting the SCU constituting the lowermost depth by 4. Alternatively, the minimum unit according to embodiments may be a maximum square data unit that may be included in all of the coding units, prediction units, partition units, and transformation units included in the LCU.

For example, the encoding information output by the outputter 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The outputter 130 may encode and output reference information, prediction information, and slice type information related to prediction.

In the video encoding apparatus 100, the deeper coding unit may be a coding unit obtained by dividing a height or width of a coding unit of an upper depth, which is one layer above, by two. In other words, when the size of the coding unit of the current depth is $2N \times 2N$, the size of the coding unit of the lower depth is $N \times N$. Also, the coding unit with the current depth having a size of $2N \times 2N$ may include a maximum of 4 of the coding units with the lower depth.

Accordingly, the video encoding apparatus 100 may form the coding units having the tree structure by determining coding units having an optimum shape and an optimum size for each LCU, based on the size of the LCU and the maximum depth determined considering characteristics of the current picture. Also, since encoding may be performed on each LCU by using any one of various prediction modes and transformations, an optimum encoding mode may be determined considering characteristics of the coding unit of various image sizes.

Thus, if an image having a high resolution or a large data amount is encoded in a macroblock of the related art, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The number of video encoding apparatuses 100 included in the scalable video encoding apparatus 10 described with reference to FIG. 1A may be as much as the number of layers to encode single layer images for each layer of multilayer video. For example, the base layer encoder 12 may include one video encoding apparatus 100, and the number of video encoding apparatuses 100 included in the enhancement layer encoder 14 may be as much as the number of enhancement layers.

When the video encoding apparatus 100 encodes base layer images, the coding unit determiner 120 may determine prediction units for prediction between images according to coding units having the tree structure for each LCU, and perform prediction between images for each prediction unit.

When the video encoding apparatus 100 encodes enhancement layer images, the coding unit determiner 120 may determine coding units having the tree structure and prediction units, and perform inter prediction for each prediction unit.

The video encoding apparatus 100 may encode inter-layer prediction errors for predicting enhancement layer images by using SAOs. Thus, without having to encode prediction errors according to pixel locations, prediction errors of enhancement layer images may be encoded by using information regarding SAO types and offsets based on a sample value distribution of prediction errors.

FIG. 9 is a block diagram of a video decoding apparatus 200 based on coding units having a tree structure, according to one or more embodiments.

The video decoding apparatus 200 that involves video prediction based on coding units having a tree structure includes a receiver 210, an image data and encoding information extractor 220, and an image data decoder 230.

Definitions of various terms, such as a coding unit, a depth, a prediction unit, a transformation unit, and information about various encoding modes, for decoding operations of the video decoding apparatus 200 are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each LCU, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each LCU, from the parsed bitstream. The extracted information about the coded depth and the encoding mode is output to the image data decoder 230. In other words, the image data in a bit stream is split into the LCU so that the image data decoder 230 decodes the image data for each LCU.

The information about the coded depth and the encoding mode according to the LCU may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each LCU extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each LCU. Accordingly, the video decoding apparatus 200 may reconstruct an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding LCU is recorded according to predetermined data units, the predetermined data units to which the same information about the coded depth and the encoding mode is assigned may be inferred to be the data units included in the same LCU.

The image data decoder 230 reconstructs the current picture by decoding the image data in each LCU based on the information about the coded depth and the encoding mode according to the LCUs. In other words, the image data decoder 230 may decode the encoded image data based on the extracted information about the partition type, the prediction mode, and the transformation unit for each coding unit from among the coding units having the tree structure included in each LCU. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each LCU. Via the inverse transformation, a pixel value of the space domain of the coding unit may be reconstructed.

The image data decoder 230 may determine a coded depth of a current LCU by using split information according to depths. If the split information indicates that image data is no longer split in the current depth, the current depth is a coded depth. Accordingly, the image data decoder 230 may decode encoded data in the current LCU by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The number of video decoding apparatuses 200 included in the scalable video decoding apparatus 20 described with reference to FIG. 2A may be as much as the number of views to decode a received base layer image stream and enhancement layer image stream and generate base layer reconstructed images and enhancement layer reconstructed images.

When the base layer image stream is received, the image data decoder 230 of the video decoding apparatus 200 may split samples of base layer images that are extracted from the base layer image stream by the image data and encoding information extractor 220 into coding units of a LCU according to the tree structure. The image data decoder 230 may perform motion compensation according to prediction units for prediction between images for each coding unit of samples of base layer images according to the tree structure and generate base layer reconstructed images.

When the enhancement layer image stream is received, the image data decoder 230 of the video decoding apparatus 200 may split samples of enhancement layer images that are extracted from the enhancement layer image stream by the image data and encoding information extractor 220 into coding units of the LCU according to the tree structure. The image data decoder 230 may perform motion compensation according to prediction units for prediction between images for each coding unit of samples of enhancement layer images according to the tree structure and generate enhancement layer reconstructed images.

The image data and encoding information extractor 220 may obtain SAO types and offsets from a received enhancement layer bitstream and determine SAO categories according to a distribution of sample values for each pixel of enhancement layer prediction images, thereby obtaining offsets according to SAO categories by using SAO types and offsets. Thus, although prediction errors according to pixels are not received, the image data decoder 230 may compensate for offsets according to corresponding categories for each pixel of the enhancement layer prediction images, and determine enhancement layer reconstructed images by referring to the compensated enhancement layer prediction images.

Thus, the video decoding apparatus 200 may obtain information about at least one coding unit that generates the minimum encoding error when encoding is recursively performed for each LCU, and may use the information to decode the current picture. In other words, the coding units having the tree structure determined to be the optimum coding units in each LCU may be decoded.

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder.

FIG. 10 is a diagram for describing a concept of coding units according to one or more embodiments.

A size of a coding unit may be expressed by width $\times$ height, and may be 64$\times$64, 32$\times$32, 16$\times$16, and 8$\times$8. A coding unit of 64$\times$64 may be split into partitions of 64$\times$64, 64$\times$32, 32$\times$64, or 32$\times$32, and a coding unit of 32$\times$32 may be split into partitions of 32$\times$32, 32$\times$16, 16$\times$32, or 16$\times$16, a coding unit of 16$\times$16 may be split into partitions of 16$\times$16, 16$\times$8, 8$\times$16, or 8$\times$8, and a coding unit of 8$\times$8 may be split into partitions of 8$\times$8, 8$\times$4, 4$\times$8, or 4$\times$4.

In video data 310, a resolution is 1920$\times$1080, a maximum size of a coding unit is 64, and a maximum depth is 2. In video data 320, a resolution is 1920$\times$1080, a maximum size of a coding unit is 64, and a maximum depth is 3. In video data 330, a resolution is 352$\times$288, a maximum size of a coding unit is 16, and a maximum depth is 1. The maximum depth shown in FIG. 10 denotes a total number of splits from a LCU to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a LCU having a long axis size of 64, and coding units having long axis sizes of 32 and 16 since depths are deepened to two layers by splitting the LCU twice. Since the maximum depth of the video data 330 is 1, coding units 335 of the video data 330 may include a LCU having a long axis size of 16, and coding units having a long axis size of 8 since depths are deepened to one layer by splitting the LCU once.

Since the maximum depth of the video data 320 is 3, coding units 325 of the video data 320 may include a LCU having a long axis size of 64, and coding units having long axis sizes of 32, 16, and 8 since the depths are deepened to 3 layers by splitting the LCU three times. As a depth deepens, detailed information may be precisely expressed.

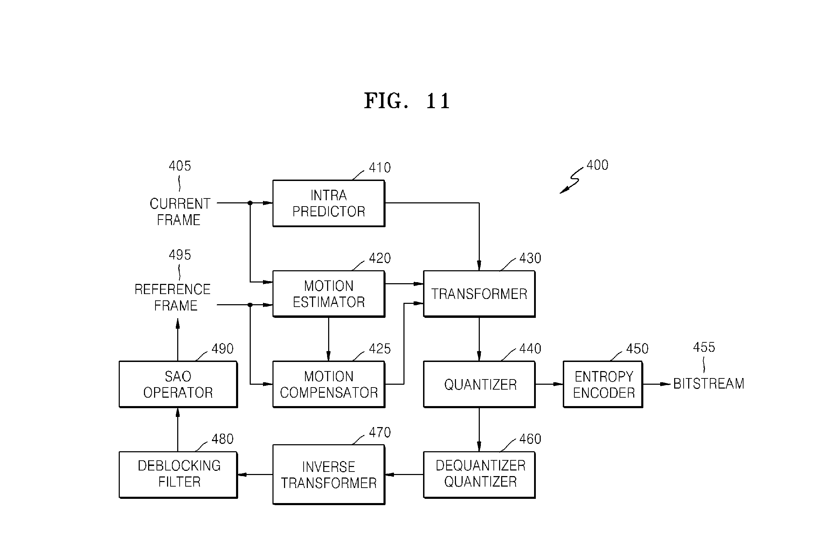

FIG. 11 is a block diagram of an image encoder 400 based on coding units, according to one or more embodiments.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in the space domain through an inverse quantizer 460 and an inverse transformer 470, and the reconstructed data in the space domain is output as the reference frame 495 after being post-processed through a deblocking filter 480 and an SAO operator 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking filter 480, and the SAO operator 490 perform operations based on each coding unit among coding units having a tree structure while considering the maximum depth of each LCU.

In particular, the intra predictor 410, the motion estimator 420, and the motion compensator 425 determine partitions and a prediction mode of each coding unit from among the coding units having a tree structure while considering the maximum size and the maximum depth of a current LCU, and the transformer 430 determines the size of the transformation unit in each coding unit from among the coding units having a tree structure.

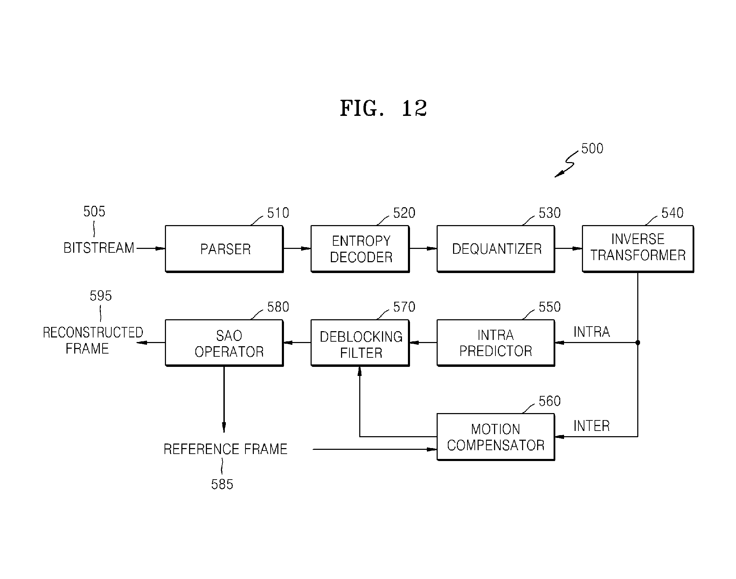

FIG. 12 is a block diagram of an image decoder 500 based on coding units, according to one or more embodiments.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in the space domain through an inverse transformer 540.

An intra predictor 550 performs intra prediction on coding units in an intra mode with respect to the image data in the space domain, and a motion compensator 560 performs motion compensation on coding units in an inter mode by using a reference frame 585.

The image data in the space domain, which passed through the intra predictor 550 and the motion compensator 560, may be output as a reconstructed frame 595 after being post-processed through a deblocking filter 570 and an SAO operator 580. Also, the image data that is post-processed through the deblocking filter 570 and the SAO operator 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking filter 570, and the SAO operator 580 perform operations based on coding units having a tree structure for each LCU.

In particular, the intra prediction 550 and the motion compensator 560 perform operations based on partitions and a prediction mode for each of the coding units having a tree structure, and the inverse transformer 540 perform operations based on a size of a transformation unit for each coding unit.

The encoding operation of FIG. 11 and the decoding operation of FIG. 12 respectively concern a video stream encoding operation and a video steam decoding operation in a single layer. Thus, if the base layer encoder 12 of FIG. 1A encodes video streams of two or more layers, the image encoder 400 may be included according to layers. Similarly, if the enhancement layer decoder 26 of FIG. 2A decodes video streams of two or more layers, the image decoder 500 may be included according to layers.

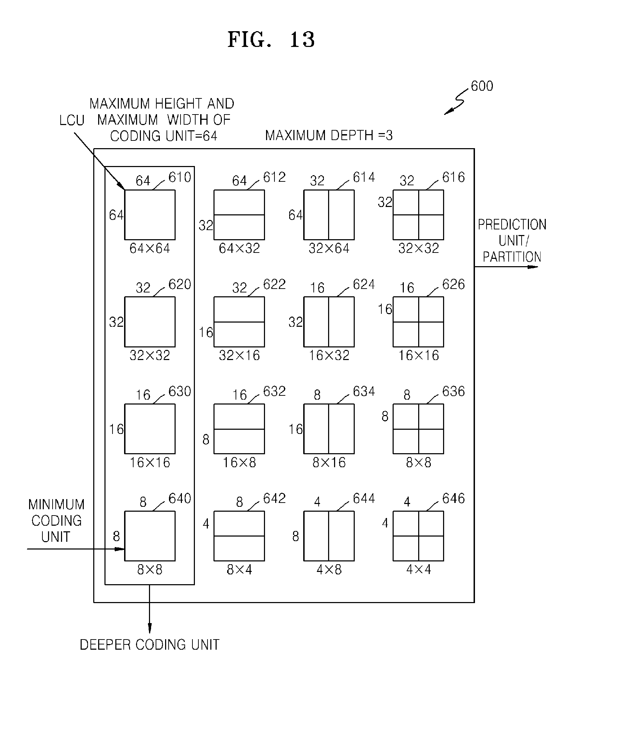

FIG. 13 is a diagram illustrating deeper coding units according to depths, and partitions, according to one or more embodiments.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to one or more embodiments, the maximum height and the maximum width of the coding units are each 64, and the maximum depth is 3. In this case, the maximum depth refers to a total number of times the coding unit is split from the LCU to the SCU. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a LCU in the hierarchical structure 600, wherein a depth is 0 and a size, i.e., a height by width, is $64\times64$. The depth deepens along the vertical axis, and a coding unit 620 having a size of $32\times32$ and a depth of 1, a coding unit 630 having a size of $16\times16$ and a depth of 2, and a coding unit 640 having a size of $8\times8$ and a depth of 3. The coding unit 640 having a size of $4\times4$ and a depth of 3 is an SCU.

The prediction unit and the partitions of a coding unit are arranged along the horizontal axis according to each depth. In other words, if the coding unit 610 having a size of $64\times64$ and a depth of 0 is a prediction unit, the prediction unit may be split into partitions include in the encoding unit 610, i.e. a partition 610 having a size of $64\times64$, partitions 612 having the size of $64\times32$, partitions 614 having the size of $32\times64$, or partitions 616 having the size of $32\times32$.

Similarly, a prediction unit of the coding unit 620 having the size of 32×32 and the depth of 1 may be split into partitions included in the coding unit 620, i.e. a partition 620 having a size of 32×32, partitions 622 having a size of 32×16, partitions 624 having a size of 16×32, and partitions 626 having a size of 16×16.

Similarly, a prediction unit of the coding unit 630 having the size of 16×16 and the depth of 2 may be split into partitions included in the coding unit 630, i.e. a partition having a size of 16×16 included in the coding unit 630, partitions 632 having a size of 16×8, partitions 634 having a size of 8×16, and partitions 636 having a size of 8×8.

Similarly, a prediction unit of the coding unit 640 having the size of 8×8 and the depth of 3 may be split into partitions included in the coding unit 640, i.e. a partition having a size of 8×8 included in the coding unit 640, partitions 642 having a size of 8×4, partitions 644 having a size of 4×8, and partitions 646 having a size of 4×4.

In order to determine the at least one coded depth of the coding units constituting the LCU 610, the coding unit determiner 120 of the video encoding apparatus 100 performs encoding for coding units corresponding to each depth included in the LCU 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

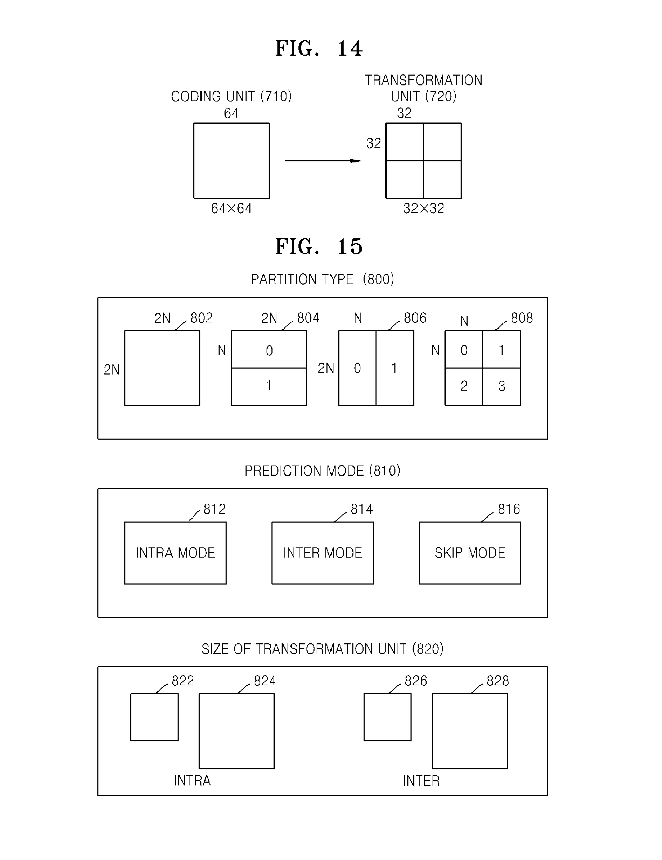

FIG. 14 is a diagram for describing a relationship between a coding unit 710 and transformation units 720, according to one or more embodiments.

The video encoding apparatus 100 or the video decoding apparatus 200 encodes or decodes an image according to coding units having sizes smaller than or equal to a LCU for each LCU. Sizes of transformation units for transformation during encoding may be selected based on data units that are not larger than a corresponding coding unit.

For example, in the video encoding apparatus 100 or the video decoding apparatus 200, if a size of the coding unit 710 is 64×64, transformation may be performed by using the transformation units 720 having a size of 32×32.

Also, data of the coding unit 710 having the size of 64×64 may be encoded by performing the transformation on each of the transformation units having the size of 32×32, 16×16, 8×8, and 4×4, which are smaller than 64×64, and then a transformation unit having the least coding error may be selected.

FIG. 15 is a diagram fro describing encoding information of coding units corresponding to a coded depth, according to one or more embodiments.

The outputter 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2N×2N may be split into any one of a partition 802 having a size of 2N×2N, a partition 804 having a size of 2N×N, a partition 806 having a size of N×2N, and a partition 808 having a size of N×N. Here, the information 800 about a partition type is set to indicate one of the partition 804 having a size of 2N×N, the partition 806 having a size of N×2N, and the partition 808 having a size of N×N.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

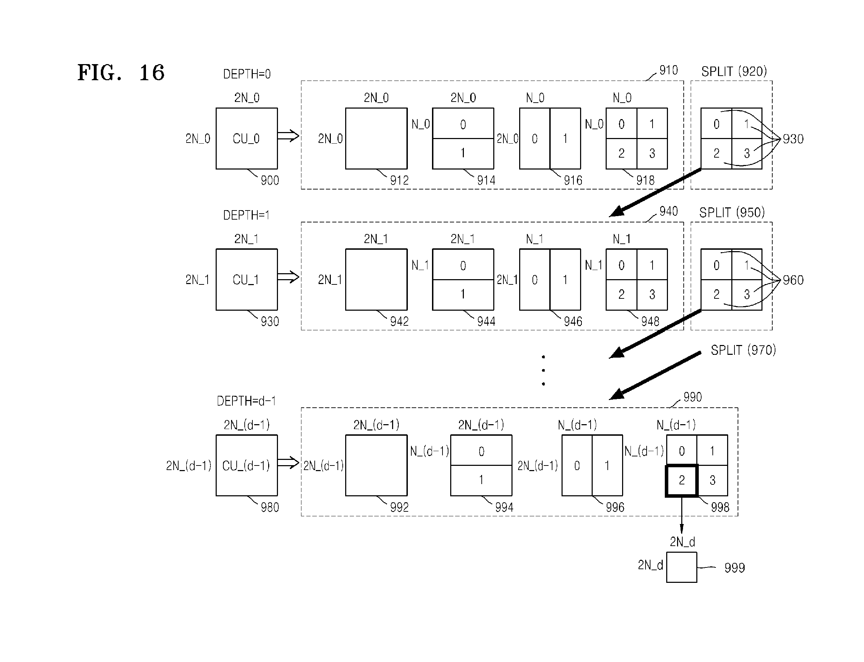

FIG. 16 is a diagram of deeper coding units according to depths, according to one or more embodiments.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0×2N_0 may include partitions of a partition type 912 having a size of 2N_0×2N_0, a partition type 914 having a size of 2N_0×N_0, a partition type 916 having a size of N_0×2N_0, and a partition type 918 having a size of N_0×N_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0×2N_0, two partitions having a size of 2N_0×N_0, two partitions having a size of N_0×2N_0, and four partitions having a size of N_0×N_0, according to each partition type. The prediction encoding in an intra mode and an inter mode may be performed on the partitions having the sizes of 2N_0×2N_0, N_0×2N_0, 2N_0×N_0, and N_0×N_0. The prediction encoding in a skip mode is performed only on the partition having the size of 2N_0×2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0×N_0 to search for a minimum encoding error.

A prediction unit 940 for prediction encoding the coding unit 930 having a depth of 1 and a size of 2N_1×2N_1 (=N_0×N_0) may include partitions of a partition type 942 having a size of 2N_1×2N_1, a partition type 944 having a size of 2N_1×N_1, a partition type 946 having a size of N_1×2N_1, and a partition type 948 having a size of N_1×N_1.

If an encoding error is the smallest in the partition type 948, a depth is changed from 1 to 2 to split the partition type 948 in operation 950, and encoding is repeatedly performed on coding units 960, which have a depth of 2 and a size of N_2×N_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)×2N_(d-1) may include partitions of a partition type 992 having a size of 2N_(d-1)×2N_(d-1), a partition type 994 having a size of 2N_(d-1)×N_(d-1), a partition type 996 having a size of N_(d-1)×2N_(d-1), and a partition type 998 having a size of N_(d-1)×N_(d-1).

Prediction encoding may be repeatedly performed on one partition having a size of 2N_(d-1)×2N_(d-1), two partitions having a size of 2N_(d-1)×N_(d-1), two partitions having a size of N_(d-1)×2N_(d-1), four partitions having a size of N_(d-1)×N_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current LCU 900 is determined to be d-1 and a partition type of the current LCU 900 may be determined to be N_(d-1)×N_(d-1). Also, since the maximum depth is d and an SCU 980 having a lowermost depth of d-1 is no longer split to a lower depth, split information of the SCU 980 is not set.

A data unit 999 may be a 'minimum unit' for the current LCU. A minimum unit according to one or more embodiments may be a square data unit obtained by splitting an SCU 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

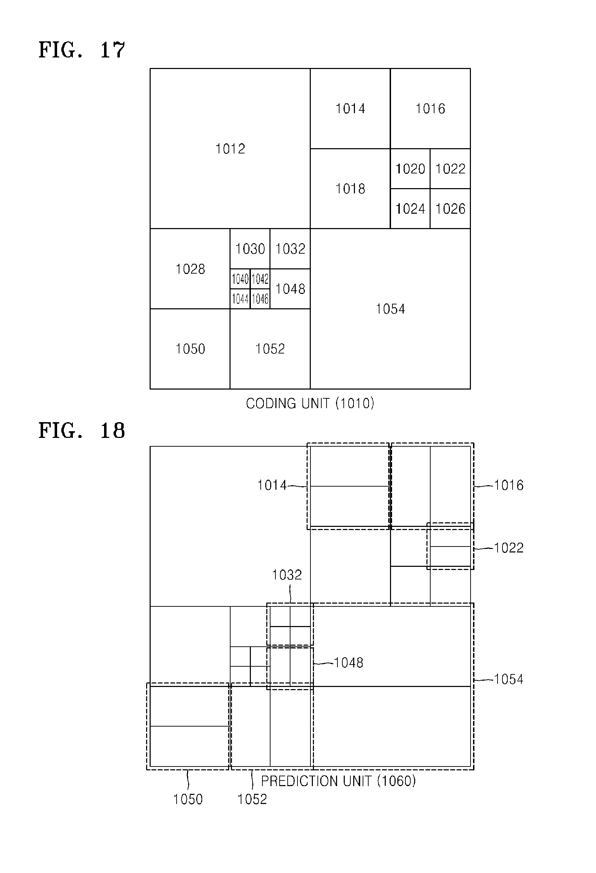

FIGS. 17 through 19 are diagrams for describing a relationship between coding units 1010, prediction units 1060, and transformation units 1070, according to one or more embodiments.

The coding units 1010 are coding units having a tree structure, corresponding to coded depths determined by the video encoding apparatus 100, in a LCU. The prediction units 1060 are partitions of prediction units of each of the coding units 1010, and the transformation units 1070 are transformation units of each of the coding units 1010.

When a depth of a LCU is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2N×N, partition types in the coding units 1016, 1048, and 1052 have a size of N×2N, and a partition type of the coding unit 1032 has a size of N×N. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a LCU to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

Table 1

| Split Information 0 (Encoding on Coding Unit having Size of 2N×2N and Current Depth of d) | | | | | Split Information 1 |
|---|---|---|---|---|---|
| Prediction Mode | Partition Type | | Size of Transformation Unit | | |
| Intra Inter | Symmetrical Partition Type | Asymmetrical Partition Type | Split Information 0 of Transformation Unit | Split Information 1 of Transformation Unit | Repeatedly Encode Coding Units having Lower Depth of d+1 |
| Skip (Only 2N×2N) | 2N×2N 2N×N N×2N N×N | 2N×nU 2N×nD nL×2N nR×2N | 2N×2N | N×N (Symmetrical Type) N/2×N/2 (Asymmetrical Type) | |

The outputter 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2N×2N.

The information about the partition type may indicate symmetrical partition types having sizes of 2N×2N, 2N×N, N×2N, and N×N, which are obtained by symmetrically splitting a height or a width of a prediction unit, and asymmetrical partition types having sizes of 2N×nU, 2N×nD, nL×2N, and nR×2N, which are obtained by asymmetrically splitting the height or width of the prediction unit. The asymmetrical partition types having the sizes of 2N×nU and 2N×nD may be respectively obtained by splitting the height of the prediction unit in 1:3 and 3:1, and the asymmetrical partition types having the sizes of nL×2N and nR×2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2N×2N, which is the size of the current coding unit. If split information of the transformation unit is 1, the transformation units may be obtained by splitting the current coding unit. Also, if a partition type of the current coding unit having the size of 2N×2N is a symmetrical partition type, a size of a transformation unit may be N×N, and if the partition type of the current coding unit is an asymmetrical partition type, the size of the transformation unit may be N/2×N/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a LCU may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

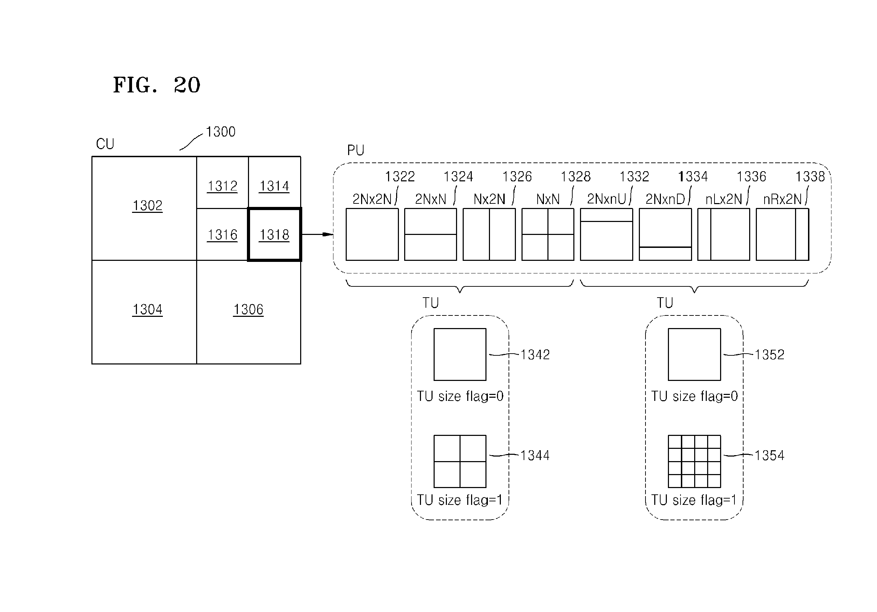

FIG. 20 is a diagram for describing a relationship between a coding unit, a prediction unit, and a transformation unit, according to encoding mode information of Table 1.

A LCU 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2N×2N may be set to be one of a partition type 1322 having a size of 2N×2N, a partition type 1324 having a size of 2N×N, a partition type 1326 having a size of N×2N, a partition type 1328 having a size of N×N, a partition type 1332 having a size of 2N×nU, a partition type 1334 having a size of 2N×nD, a partition type 1336 having a size of nL×2N, and a partition type 1338 having a size of nR×2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2N×2N is set if a TU size flag of a transformation unit is 0, and a transformation unit 1344 having a size of N×N is set if a TU size flag is 1.

When the partition type is set to be asymmetrical, i.e., the partition type 1332, 1334, 1336, or 1338, a transformation unit 1352 having a size of 2N×2N is set if a TU size flag is 0, and a transformation unit 1354 having a size of N/2×N/2 is set if a TU size flag is 1.

Referring to FIG. 20, the TU size flag is a flag having a value or 0 or 1, but the TU size flag is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to embodiments according to the present disclosure, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64×64 and a maximum transformation unit size is 32×32, (a-1) then the size of a transformation unit may be 32×32 when a TU size flag is 0, (a-2) may be 16×16 when the TU size flag is 1, and (a-3) may be 8×8 when the TU size flag is 2.

As another example, (b) if the size of the current coding unit is 32×32 and a minimum transformation unit size is 32×32, (b-1) then the size of the transformation unit may be 32×32 when the TU size flag is 0. Here, the TU size flag cannot be set to a value other than 0, since the size of the transformation unit cannot be less than 32×32.

As another example, (c) if the size of the current coding unit is 64×64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

CurrMinTuSize

$$= \max (\text{MinTransformSize}, \text{RootTuSize}/(2^{\wedge}\text{MaxTransformSizeIndex})) \ ... \ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to embodiments according to the present disclosure, the maximum transformation unit size Root-TuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \dots\dots\dots (2)$$

In other words, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \dots\dots\dots(3)$$

In other words, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 8 through 20, image data of the space domain is encoded for each coding unit of a tree structure. According to the video decoding method based on coding units having a tree structure, decoding is performed for each LCU to reconstruct image data of the space domain. Thus, a picture and a video that is a picture sequence may be reconstructed. The reconstructed video may be reproduced by a reproducing apparatus, stored in a storage medium, or transmitted through a network.

The embodiments may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the scalable video encoding method and/or video encoding method described above with reference to FIGS. 1A through 20 will be referred to as a 'video encoding method according to the present disclosure'. In addition, the scalable video decoding method and/or video decoding method described above with reference to FIGS. 1A through 20 will be referred to as a 'video decoding method according to the present disclosure'.

Also, a video encoding apparatus including the scalable video encoding apparatus 10, the video encoding apparatus 100, or the image encoder 400, which is described above with reference to FIGS. 1A through 20 will be referred to as a 'video encoding apparatus according to the present disclosure'. In addition, a video decoding apparatus including the scalable video decoding apparatus 20, the video decoding apparatus 200, or the image decoder 500, which is described above with reference to FIGS. 1A through 20 will be referred to as a 'video decoding apparatus according to the present disclosure.

A computer-readable recording medium storing a program, e.g., a disc 26000, according to one or more embodiments will now be described in detail.

FIG. 21 is a diagram of a physical structure of the disc 26000 in which a program is stored, according to one or more embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determination method, the video encoding method, and the video decoding method described above may be assigned and stored.

A computer system embodied using a storage medium that stores a program for executing the video encoding method and the video decoding method as described above will now be described with reference to FIG. 22.

FIG. 22 is a diagram of a disc drive 26800 for recording and reading a program by using the disc 26000. A computer system 26700 may store a program that executes at least one of a video encoding method and a video decoding method according to one or more embodiments, in the disc 26000 via the disc drive 26800. To run the program stored in the disc 26000 in the computer system 26700, the program may be read from the disc 26000 and be transmitted to the computer system 26700 by using the disc drive 26700.

The program that executes at least one of a video encoding method and a video decoding method according to one or more embodiments may be stored not only in the disc 26000 illustrated in FIG. 21 or 22 but also in a memory card, a ROM cassette, or a solid state drive (SSD).

A system to which the video encoding method and a video decoding method described above are applied will be described below.

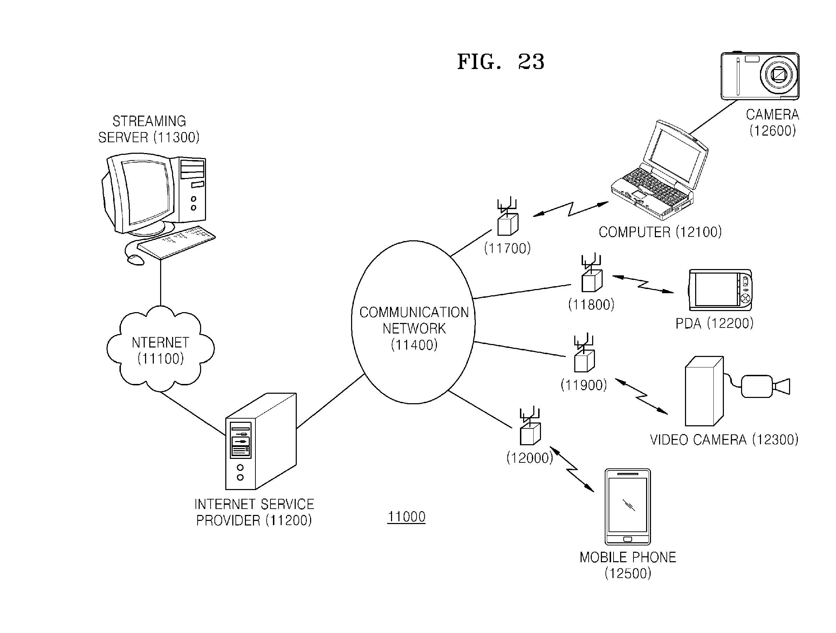

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

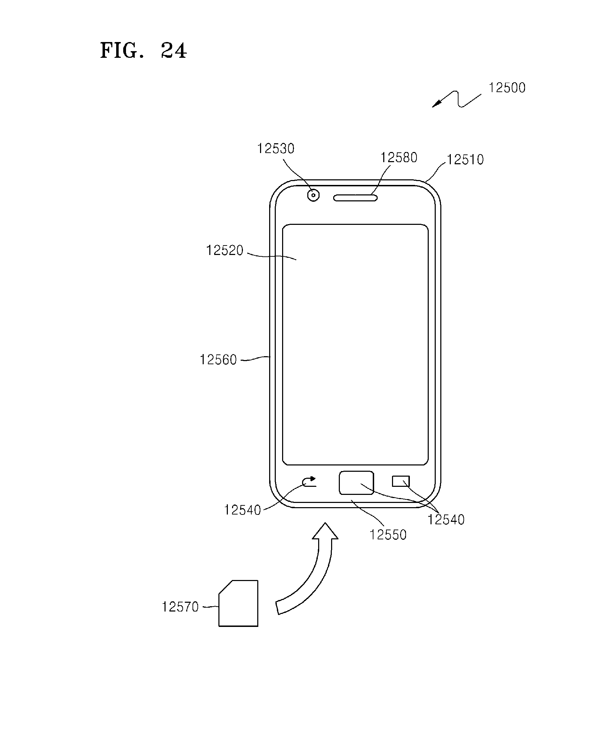

However, the content supply system 11000 is not limited to as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to one or more embodiments.

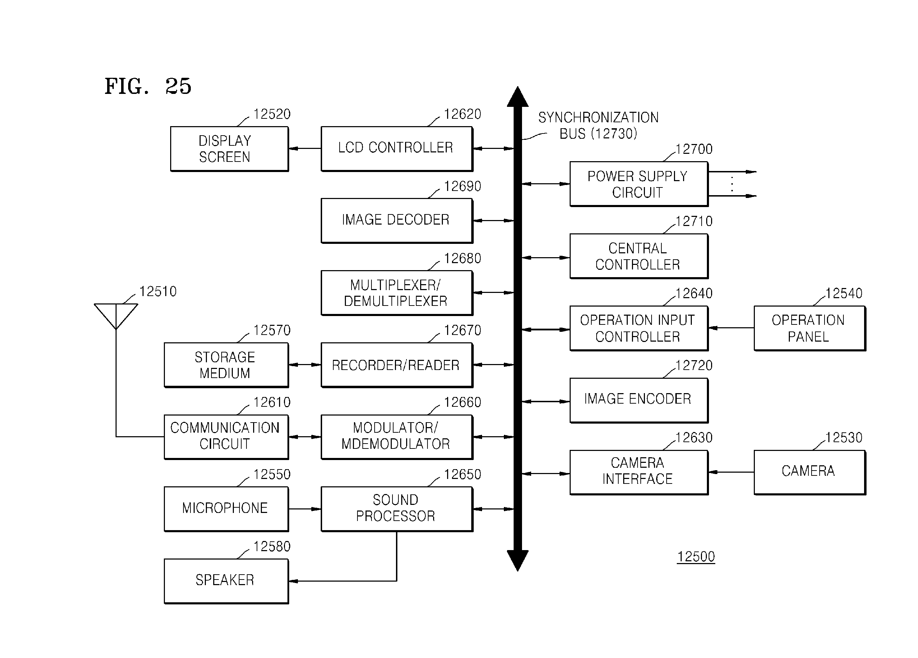

The mobile phone 12500 included in the content supply system 11000 according to one or more embodiments will now be described in greater detail with referring to FIGS. 24 and 25.

FIG. 24 illustrates an external structure of the mobile phone 12500 to which a video encoding method and a video decoding method are applied, according to one or more embodiments. The mobile phone 12500 may be a smart phone, the functions of which are not limited and a large number of the functions of which may be changed or expanded.

The mobile phone 12500 includes an internal antenna 12510 via which a radiofrequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound outputter, and a microphone 12550 for inputting voice and sound or another type sound inputter. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500, according to one or more embodiments. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recorder/reader 12670, a modulator/demodulator 12660, and a sound processor 12650 are connected to a central controller 12710 via a synchronization bus 12730.

If a user operates a power button and sets from a 'power off' state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulator/demodulator 12660 under control of the central controller 12710, the modulator/demodulator 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulator/demodulator 12660 and the communication circuit 12610, and may be transmitted via the antenna 12510.

When a text message, e.g., email, is transmitted in a data communication mode, text data of the text message is input via the operation panel 12540 and is transmitted to the central controller 12710 via the operation input controller 12640. Under control of the central controller 12710, the text data is transformed into a transmission signal via the modulator/demodulator 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the above-described video encoding method according to the present disclosure. The image encoder 12720 may transform the image data received from the camera 12530 into compressed and encoded image data based on the above-described video encoding method according to the present disclosure, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulator/demodulator 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulator/demodulator 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulator/demodulator 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulator/demodulator 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoder 12690 may correspond to that of the above-described video decoding method according to the present disclosure. The image decoder 12690 may decode the encoded video data to obtain reconstructed video data and provide the reconstructed video data to the display screen 12520 via the LCD controller 12620, by using the above-described video decoding method according to the present disclosure.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to one or more embodiments, may be a transceiving terminal including only the video encoding apparatus, or may be a transceiving terminal including only the video decoding apparatus.

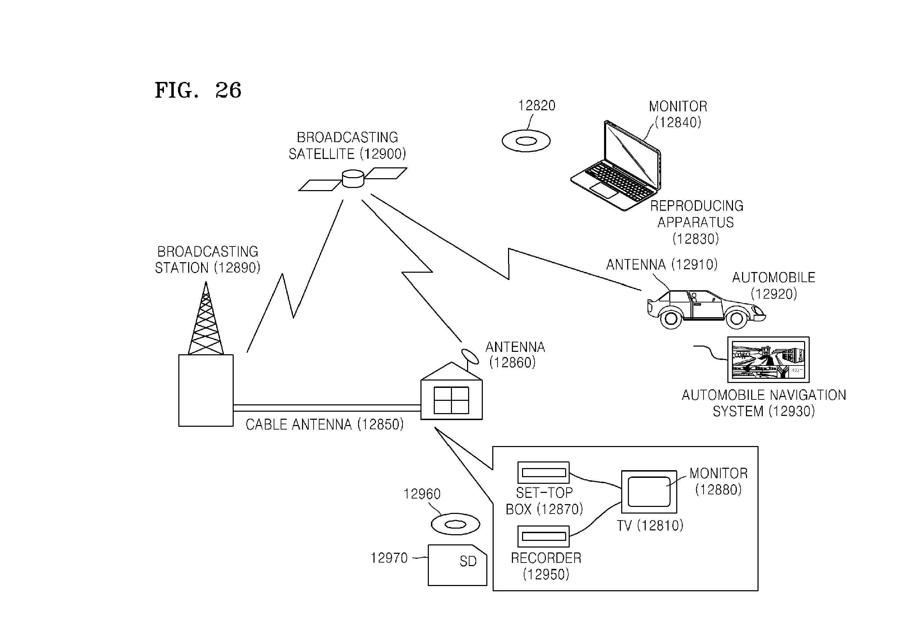

A communication system according to the present disclosure is not limited to the communication system described above with reference to FIG. 24. For example, FIG. 26 illustrates a digital broadcasting system employing a communication system, according to one or more embodiments. The digital broadcasting system of FIG. 26 may receive a digital broadcast transmitted via a satellite or a terrestrial network by using a video encoding apparatus and a video decoding apparatus according to one or more embodiments.

In particular, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to one or more embodiments is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to one or more embodiments may be installed. Data output from the set-top box 12870 may also be reproduced on a TV monitor 12880.

As another example, a video decoding apparatus according to one or more embodiments may be installed in the TV receiver 12810 instead of the set-top box 12870.

An automobile 12920 that has an appropriate antenna 12910 may receive a signal transmitted from the satellite 12900 or the wireless base station 11700 of FIG. 21. A decoded video may be reproduced on a display screen of an automobile navigation system 12930 installed in the automobile 12920.

A video signal may be encoded by a video encoding apparatus according to one or more embodiments and may then be stored in a storage medium. In particular, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to one or more embodiments, a video signal recorded on the DVD disc 12960, the SD card 12970, or another storage medium may be reproduced on the TV monitor 12880.

The automobile navigation system 12930 may not include the camera 12530 of FIG. 24, and the camera interface 12630 and the image encoder 12720 of FIG. 25. For example, the computer 12100 and the TV receiver 12810 may not include the camera 12530, the camera interface 12630, and the image encoder 12720.

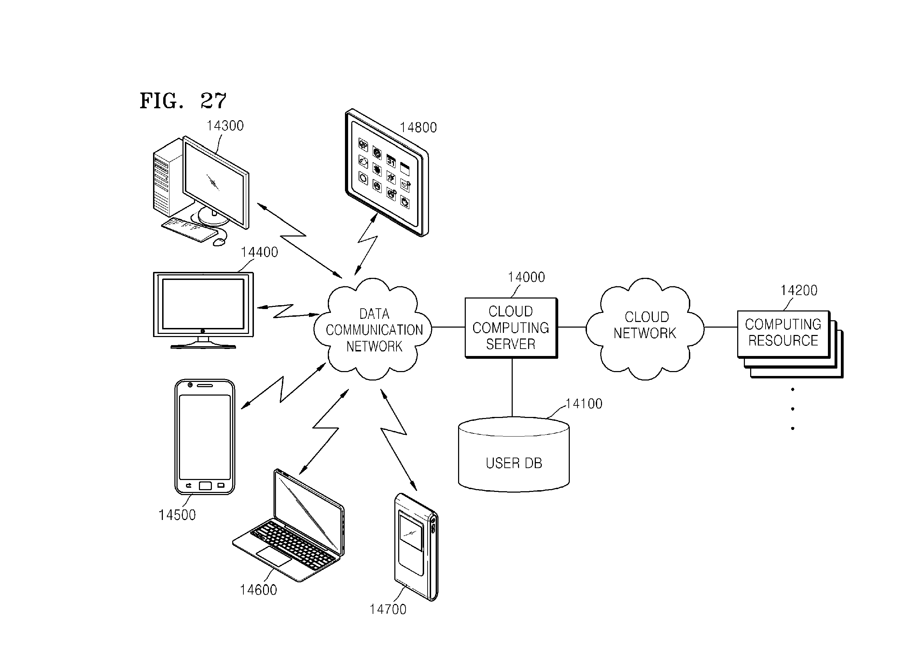

FIG. 27 is a diagram illustrating a network structure of a cloud computing system using a video encoding apparatus and a video decoding apparatus, according to one or more embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A through 20. As another example, the user terminal may include a video encoding apparatus as described above with reference to FIGS. 1A through 20. Alternatively, the user terminal may include both the video decoding apparatus and the video encoding apparatus as described above with reference to FIGS. 1A through 20.

Various applications of a video encoding method, a video decoding method, a video encoding apparatus, and a video decoding apparatus according to one or more embodiments described above with reference to FIGS. 1A through 20 have been described above with reference to FIGS. 21 to 27. However, methods of storing the video encoding method and the video decoding method in a storage medium or methods of implementing the video encoding apparatus and the video decoding apparatus in a device, according to various embodiments of the present disclosure, are not limited to the embodiments described above with reference to FIGS. 21 to 27.

While the one or more embodiments have been particularly shown and described with reference to exemplary embodiments thereof, it will be understood by one of ordinary skill in the art that various changes in form and details may be made therein without departing from the spirit and scope of the invention as defined by the following claims. The exemplary embodiments should be considered in a descriptive sense only and not for purposes of limitation. Therefore, the scope of the invention is defined not by the detailed description of the invention but by the following claims, and all differences within the scope will be construed as being included in the one or more embodiments.

**Claims**

1.  A scalable video decoding method comprising:

    obtaining inter-layer sample adaptive offset (SAO) use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream;
    determining the SAO type of the enhancement layer prediction image and offsets corresponding to the prediction errors classified according to categories, from the obtained SAO parameters; and
    generating an enhancement layer reconstructed image by using the enhancement layer prediction image compensated by the determined offsets by determining a category of a current sample for each pixel location of the enhancement layer prediction image.

2.  The method of claim 1, wherein the generating of the enhancement layer reconstructed image comprises:

    determining the enhancement layer prediction image by using the base layer reconstructed image decoded from a base layer stream; and
    compensating for the enhancement layer prediction image by applying the offsets to the enhancement layer prediction image.

3.  The method of claim 2, wherein the determining of the enhancement layer prediction image comprises: determining the enhancement layer prediction image by interpolating the base layer reconstructed image to resize the base layer reconstructed image to have the same resolution as that of an enhancement layer original image.

4.  The method of claim 1, wherein the obtaining of the SAO parameters comprises:

    obtaining the SAO parameters for each data unit of one of a picture, a slice, a largest coding unit (LCU), and a coding unit of the enhancement layer prediction image,
    wherein the determining of the offsets comprises: sequentially determining the SAO type indicating whether each sample of the data unit of the enhancement layer prediction image constitutes an edge, offsets indicating average values of the prediction errors classified according to categories with respect to the SAO type, and signs of the offsets, based on the SAO parameters, and
    wherein the signs of the offsets according to an inter-layer SAO are determined based on at least one of the SAO type, the categories, and a resolution ratio between a base layer image and an enhancement layer image.

5.  The method of claim 1, wherein the determining of the offsets comprises: when inter-layer prediction errors are compensated for based on the obtained inter-layer SAO use information, using the offsets obtained from the SAO parameters, for an enhancement layer region predicted by using a base layer region according to one of an intra base layer prediction mode and a differential prediction mode in the base layer reconstructed image.

6.  The method of claim 1, wherein the determining of the offsets comprises:

    obtaining the offsets according to the categories determined based on an edge direction or a sample value range of the enhancement layer prediction image, from the SAO parameters; and
    further obtaining the offsets according to the categories determined based on at least one of a resolution ratio between a base layer image and an enhancement layer image, a phase shift of an interpolation filter for resizing the base layer reconstructed image to have the same resolution as that of an enhancement layer original image, and a filtering order of the interpolation filter.

7.  The method of claim 1, wherein the obtaining of the SAO parameters comprises:

    obtaining base layer SAO merge information indicating whether to determine offsets for the enhancement layer prediction image by using SAO parameters of a collocated region of a base layer image, and
    wherein the determining of the offsets comprises: determining information regarding at least one of the SAO parameters for a current region of the enhancement layer prediction image by using information regarding at least one of the SAO parameters of the collocated region of the base layer image corresponding to the current region of the enhancement layer prediction image, based on the base layer SAO merge information.

**8.** A scalable video encoding method comprising:

determining prediction errors between samples of an enhancement layer prediction image and an enhancement layer original image for each pixel location of an enhancement layer image;
determining a SAO type of the enhancement layer prediction image and offsets corresponding to the prediction errors classified according to categories, based on a distribution of sample values of the enhancement layer prediction image; and
determining inter-layer SAO use information indicating whether to compensate for prediction errors according to inter-layer prediction between a base layer reconstructed image and the enhancement layer prediction image, and SAO parameters indicating the SAO type of the enhancement layer prediction image and the offsets.

**9.** The method of claim 8, wherein the determining of the prediction errors between the samples comprises:

determining the enhancement layer prediction image by using the base layer reconstructed image; and
determining the prediction errors between the samples of the enhancement layer prediction image and the enhancement layer original image for each pixel location,
the method further comprising: generating the enhancement layer reconstructed image by using the enhancement layer prediction image compensated by applying the prediction errors to the enhancement layer prediction image.

**10.** The method of claim 8, wherein the determining of the prediction errors between the samples comprises:

determining the enhancement layer prediction image by interpolating the base layer reconstructed image to resize the base layer reconstructed image to have the same resolution as that of the enhancement layer original image; and
determining the prediction errors between the samples of the enhancement layer prediction image and the enhancement layer original image for each pixel location.

**11.** The method of claim 8, wherein the determining of the offsets comprises:

determining information regarding at least one of the SAO parameters for a current region of the enhancement layer prediction image by using information regarding at least one of SAO parameters of a collocated region of a base layer image corresponding to the current region of the enhancement layer prediction image, and
wherein the determining of the SAO parameters comprises: outputting SAO parameters comprising base layer SAO merge information indicating whether to determine offsets for the enhancement layer prediction image by using the SAO parameters of the collocated region of the base layer image.

**12.** A scalable video decoding apparatus comprising:

an inter-layer SAO parameter obtainer for obtaining inter-layer SAO use information indicating whether to compensate for prediction errors according to inter-layer prediction between a base layer reconstructed image and an enhancement layer prediction image, and SAO parameters indicating a SAO type of the enhancement layer prediction image and an offset, from a received enhancement layer stream;
an inter-layer offset determiner for determining the SAO type of the enhancement layer prediction image and offsets corresponding to the prediction errors classified according to categories, from the obtained SAO parameters; and
an enhancement layer decoder for generating an enhancement layer reconstructed image by using the enhancement layer prediction image that is compensated by using the determined offsets by determining a category of a current sample for each pixel location of the enhancement layer prediction image.

**13.** A scalable video encoding apparatus comprising:

an enhancement layer image encoder for generating an enhancement layer prediction image to encode an enhancement layer image;
an inter-layer offset determiner for determining prediction errors between samples of the enhancement layer prediction image and an enhancement layer original image for each pixel location of the enhancement layer image, determining a SAO type of the enhancement layer prediction image and offsets corresponding to the prediction errors classified according to categories, based on a distribution of sample values of the enhancement layer prediction image; and

an inter-layer SAO parameter determiner for determining inter-layer SAO use information indicating whether to compensate for prediction errors according to inter-layer prediction between a base layer reconstructed image and the enhancement layer prediction image, and SAO parameters indicating the SAO type of the enhancement layer prediction image and the offsets.

14. A non-transitory computer-readable recording medium having recorded thereon a computer program for executing the method of claim 1.

15. A non-transitory computer-readable recording medium having recorded thereon a computer program for executing the method of claim 8.

## FIG. 1A

## FIG. 1B

START

DETERMINE PREDICTION ERROR BETWEEN SAMPLES OF ENHANCEMENT LAYER PREDICTION IMAGE AND ORIGINAL IMAGE — 11

DETERMINE SAO TYPES OF ENHANCEMENT LAYER PREDICTION IMAGE AND OFFSETS ACCORDING TO CATEGORIES — 13

DETERMINE INTER-LAYER SAO USE INFORMATION AND SAO PARAMETERS FOR ENHANCEMENT LAYER PREDICTION IMAGE — 15

종료

FIG. 2A

FIG. 2B

# FIG. 3

FIG. 4A

ENHANCEMENT LAYER SAO $\Updownarrow$

441 ← ENHANCEMENT LAYER ORIGINAL IMAGE

421 ← ENHANCEMENT LAYER RECONSTRUCTED IMAGE

431 ← BASE LAYER RECONSTRUCTED IMAGE

SAO BASE LAYER SAO $\Updownarrow$

411 ← BASE LAYER ORIGINAL IMAGE

FIG. 4B

INTER-LAYER SAO $\Updownarrow$

46 ← ENHANCEMENT LAYER RECONSTRUCTED IMAGE

453 ← UP-SAMPLED BASE LAYER RECONSTRUCTE IMAGE

INTERPOLATION ERROR

451 ← BASE LAYER RECONSTRUCTED IMAGE

BASE LAYER ENCODING ERROR $\Updownarrow$

45 ← BASE LAYER ORIGINAL IMAGE

FIG. 4C

48 ← ENHANCEMENT LAYER RECONSTRUCTED IMAGE

INTER-LAYER SAO $\Updownarrow$

471 ← BASE LAYER RECONSTRUCTED IMAGE

BASE LAYER ENCODING ERROR

47 ← BASE LAYER ORIGINAL IMAGE

## FIG. 5A

| EO CLASS = 0 | EO CLASS = 1 | EO CLASS = 2 | EO CLASS = 3 |
|:---:|:---:|:---:|:---:|
| HORIZONTAL | VERTICAL | 135° DIAGONAL | 45° DIAGONAL |

41 42 43 44

| | | | |
|:---:|:---:|:---:|:---:|
| X1 X0 X2 | X3 / X0 / X4 | X5 / X0 / X8 | X6 / X0 / X7 |

## FIG. 5B

| CATEGORY | CONDITION |
|:---:|:---:|
| 1 | $Xc < Xa$ && $Xc < Xb$ |
| 2 | $(Xc < Xa$ && $Xc == Xb) \| (Xc == Xa$ && $Xc < Xb)$ |
| 3 | $(Xc > Xa$ && $Xc == Xb) \| (Xc == Xa$ && $Xc > Xb)$ |
| 4 | $Xc > Xa$ && $Xc > Xb$ |
| 0 | IF CONDITIONS FOR CATEGORIES 1, 2, 3, AND 4 ARE NOT SATISFIED |

# FIG. 5C

EP 2 903 282 A1

# FIG. 5D

FIG. 6

60    64    61    690

690 ▨ BASE LAYER SAMPLE LOCATION

691 △ UP-SCALED BASE LAYER SAMPLE
LOCATION (NO INTERPOLATION)

692 ◯ UP-SCALED BASE LAYER SAMPLE
LOCATION (1D INTERPOLATION)

693 ✡ UP-SCALED BASE LAYER SAMPLE
LOCATION (2D INTERPOLATION)

65    68    66

62    67    63

# FIG. 7A

## FIG. 7B

| FIRST EMBODIMENT | |
|---|---|
| LEFT MERGE | 1 |
| UPPER MERGE | 01 |
| BASE LAYER MERGE | 001 |
| | |
| SECOND EMBODIMENT | |
| LEFT MERGE | 1 |
| BASE LAYER MERGE | 01 |
| | |
| THIRD EMBODIMENT | |
| BASE LAYER MERGE | 1 |
| LEFT MERGE | 01 |
| UPPER MERGE | 001 |

## FIG. 7C

```
                              /76
                           /
for( cldx = 0; cldx < 3; cldx++ ){
    sao_merge_left_flag
    sao_merge_up_flag
    IO_mege_base_flag
    sao_type_idx
    sao_band_position
        for( i = 0; i < 4; i++ ){
        sao_offset_abs
        sao_offset_sign
        }
    }
```

FIG. 8

100

110

| LCU SPLITTER |

120

| CODING UNIT DETERMINER |

130

| OUTPUT UNIT |

FIG. 9

200

210

| RECEIVER |

220

| IMAGE DATA AND ENCODING INFORMATION EXTRACTOR |

230

| IMAGE DATA DECODER |

## FIG. 10

64
64
64×64

64
32
64×32

32
64
32×64

32
32
32×32

32
32
32×32

32
16
32×16

16
32
16×32

16
16
16×16

16
16
16×16

16
8
16×8

8
16
8×16

8
8
8×8

8
8
8×8

8
4
8×4

4
8
4×8

4
4
4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335 325

# FIG. 11

400

405 — CURRENT FRAME

495 — REFERENCE FRAME

410 — INTRA PREDICTOR

420 — MOTION ESTIMATOR

425 — MOTION COMPENSATOR

430 — TRANSFORMER

440 — QUANTIZER

450 — ENTROPY ENCODER

455 — BITSTREAM

460 — DEQUANTIZER QUANTIZER

470 — INVERSE TRANSFORMER

480 — DEBLOCKING FILTER

490 — SAO OPERATOR

FIG. 12

500

505

BITSTREAM → | PARSER | 510 → | ENTROPY DECODER | 520 → | DEQUANTIZER | 530 → | INVERSE TRANSFORMER | 540

595

RECONSTRUCTED FRAME ← | SAO OPERATOR | 580 ← | DEBLOCKING FILTER | 570 ← | INTRA PREDICTOR | 550 ← INTRA

REFERENCE FRAME

585

| MOTION COMPENSATOR | 560 ← INTER

EP 2 903 282 A1

FIG. 13

MAXIMUM HEIGHT AND
LCU   MAXIMUM  WIDTH OF
CODING UNIT=64       MAXIMUM DEPTH =3

600

PREDICTION
UNIT/
PARTITION

64 ⟋610    64 ⟋612    32 ⟋614    32 ⟋616
64  64×64   32  64×32   64  32×64   32  32×32

32 ⟋620    32 ⟋622    16 ⟋624    16 ⟋626
32  32×32   16  32×16   32  16×32   16  16×16

16 ⟋630    16 ⟋632    8 ⟋634    8 ⟋636
16  16×16   8  16×8    16  8×16   8  8×8

MINIMUM
CODING
UNIT

8 ⟋640    8 ⟋642    4 ⟋644    4 ⟋646
8  8×8    4  8×4    8  4×8    4  4×4

DEEPER CODING UNIT

## FIG. 14

CODING UNIT (710)
64

64×64

TRANSFORMATION
UNIT (720)
32

32×32

## FIG. 15

PARTITION TYPE (800)

PREDICTION MODE (810)

| INTRA MODE | INTER MODE | SKIP MODE |

SIZE OF TRANSFORMATION UNIT (820)

INTRA          INTER

FIG. 16

FIG. 17

| | | 1014 | 1016 | |
|---|---|---|---|---|

1012

1014   1016

1018   1020 1022
       1024 1026

1028   1030 1032
       1040 1042 1048
       1044 1046

1050   1052   1054

CODING UNIT (1010)

FIG. 18

1014 — 1016
       — 1022
1032
       — 1048
       — 1054
1050   1052

PREDICTION UNIT (1060)

FIG. 19

TRANSFORMATION UNIT (1070)

# FIG. 20

CU 1300

1302

1312 | 1314
1316 | 1318

1304

1306

PU

2Nx2N 1322, 2NxN 1324, Nx2N 1326, NxN 1328, 2NxnU 1332, 2NxnD 1334, nLx2N 1336, nRx2N 1338

TU

TU size flag=0 1342
TU size flag=1 1344

TU size flag=0 1352
TU size flag=1 1354

FIG. 21

Se

Tr

DISC (26000)

FIG. 22

26700

26800

26000

# FIG. 23

STREAMING SERVER (11300)

INTERNET (11100)

INTERNET SERVICE PROVIDER (11200)

11000

COMMUNICATION NETWORK (11400)

(11700)

(11800)

(11900)

(12000)

CAMERA (12600)

COMPUTER (12100)

PDA (12200)

VIDEO CAMERA (12300)

MOBILE PHONE (12500)

EP 2 903 282 A1

FIG. 24

# FIG. 25

**12500**

- DISPLAY SCREEN (12520)
- LCD CONTROLLER (12620)
- SYNCHRONIZATION BUS (12730)
- POWER SUPPLY CIRCUIT (12700)
- IMAGE DECODER (12690)
- CENTRAL CONTROLLER (12710)
- MULTIPLEXER/ DEMULTIPLEXER (12680)
- OPERATION INPUT CONTROLLER (12640)
- OPERATION PANEL (12540)
- (12510)
- STORAGE MEDIUM (12570)
- RECORDER/READER (12670)
- IMAGE ENCODER (12720)
- COMMUNICATION CIRCUIT (12610)
- MODULATOR/ MDEMODULATOR (12660)
- CAMERA INTERFACE (12630)
- CAMERA (12530)
- MICROPHONE (12550)
- SOUND PROCESSOR (12650)
- SPEAKER (12580)

EP 2 903 282 A1

## FIG. 26

FIG. 27

## INTERNATIONAL SEARCH REPORT

International application No.

**PCT/KR2013/008751**

### A. CLASSIFICATION OF SUBJECT MATTER

*H04N 19/50(2014.01)i*

According to International Patent Classification (IPC) or to both national classification and IPC

### B. FIELDS SEARCHED

Minimum documentation searched (classification system followed by classification symbols)
H04N 19/50; H04N 19/00; H04N 7/12; H04N 19/61

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: layer, prediction error, sample, distribution

### C. DOCUMENTS CONSIDERED TO BE RELEVANT

| Category* | Citation of document, with indication, where appropriate, of the relevant passages | Relevant to claim No. |
|---|---|---|
| Y | KR 10-2012-0033289 A (ELECTRONICS AND TELECOMMUNICATIONS RESEARCH INSTITUTE et al.) 06 April 2012<br>See paragraphs [48], [55], [61], [71], [72] and [120]-[129]; claim 1; and figures 1, 2 and 5. | 1-15 |
| Y | WO 2012-126627 A1 (PANASONIC CORPORATION et al.) 27 September 2012<br>See abstract; pages 6, 7; and figures 3, 4. | 1-15 |
| A | WO 2012-025215 A1 (PANASONIC CORPORATION et al.) 01 March 2012<br>See abstract; pages 16-18; and figures 1-4. | 1-15 |
| A | US 2011-0038421 A1 (SCHWARZ, Heiko et al.) 17 February 2011<br>See paragraphs [108]-[122]; and figure 1a. | 1-15 |
| A | DE WOLF et al., "Adaptive residual interpolation: a tool for efficient spatial scalability in digital video coding" Proceedings of the 2006 International Conference on Image Processing, Computer Vision, & Pattern Recognition, Las Vegas, Nevada, USA, 26-29 June 2006, vol. 1<br>See abstract and pages 4-6. | 1-15 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 JANUARY 2014 (15.01.2014) | **15 JANUARY 2014 (15.01.2014)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/008751**

| Patent document cited in search report | Publication date | Patent family member | Publication date |
|---|---|---|---|
| KR 10-2012-0033289 A | 06/04/2012 | US 2013-0182779 A1<br>WO 2012-044093 A2<br>WO 2012-044093 A3 | 18/07/2013<br>05/04/2012<br>31/05/2012 |
| WO 2012-126627 A1 | 27/09/2012 | NONE | |
| WO 2012-025215 A1 | 01/03/2012 | NONE | |
| US 2011-0038421 A1 | 17/02/2011 | BR PI0516336 A | 02/09/2008 |
| | | BR PI0516348 A | 02/09/2008 |
| | | CN 101095357 B | 15/06/2011 |
| | | CN 101854550 A | 06/10/2010 |
| | | CN 101854550 B | 13/02/2013 |
| | | CN 101931810 A | 29/12/2010 |
| | | CN 101931810 B | 19/12/2012 |
| | | CN 101931811 A | 29/12/2010 |
| | | CN 101931811 B | 10/10/2012 |
| | | CN 101931812 A | 29/12/2010 |
| | | CN 101931812 B | 21/12/2011 |
| | | CN 101931813 A | 29/12/2010 |
| | | CN 101931813 B | 31/10/2012 |
| | | CN 101938651 A | 05/01/2011 |
| | | CN 101938651 B | 31/10/2012 |
| | | CN 101959066 A | 26/01/2011 |
| | | CN 101959066 B | 10/10/2012 |
| | | CN 101980535 A | 23/02/2011 |
| | | CN 101980535 B | 12/12/2012 |
| | | CN 102055985 A | 11/05/2011 |
| | | CN 102055985 B | 05/09/2012 |
| | | CN 102055986 A | 11/05/2011 |
| | | CN 102055986 B | 21/11/2012 |
| | | CN 102082952 A | 01/06/2011 |
| | | CN 102082952 B | 08/08/2012 |
| | | CN 102098514 A | 15/06/2011 |
| | | CN 102098514 B | 12/06/2013 |
| | | DE 102004059978 A1 | 27/04/2006 |
| | | DE 102004059978 B4 | 07/09/2006 |
| | | DE 102004059993 A1 | 27/04/2006 |
| | | DE 102004059993 B4 | 31/08/2006 |
| | | EP 1800488 A1 | 27/06/2007 |
| | | EP 1800490 A1 | 27/06/2007 |
| | | EP 2538677 A1 | 26/12/2012 |
| | | EP 2538678 A1 | 26/12/2012 |
| | | JP 05122288 B2 | 16/01/2013 |
| | | JP 2008-517498 A | 22/05/2008 |
| | | JP 2008-517499 A | 22/05/2008 |
| | | JP 2011-101410 A | 19/05/2011 |
| | | JP 2011-109691 A | 02/06/2011 |
| | | MX 2007004408 A | 15/06/2007 |

Form PCT/ISA/210 (patent family annex) (July 2009)

INTERNATIONAL SEARCH REPORT
Information on patent family members

| | | International application No. |
|---|---|---|
| | | **PCT/KR2013/008751** |

| Patent document cited in search report | Publication date | Patent family member | Publication date |
|---|---|---|---|
| | | MX 2007004409 A | 17/07/2007 |
| | | US 2006-0083308 A1 | 20/04/2006 |
| | | US 2006-0083309 A1 | 20/04/2006 |
| | | US 2012-0250759 A1 | 04/10/2012 |
| | | US 2012-0250760 A1 | 04/10/2012 |
| | | US 8218628 B2 | 10/07/2012 |
| | | WO 2006-042611 A1 | 27/04/2006 |
| | | WO 2006-042612 A1 | 27/04/2006 |

Form PCT/ISA/210 (patent family annex) (July 2009)